# EUROPEAN PATENT APPLICATION

(11) **EP 4 679 574 A1**
(43) Date of publication of application: **14.01.2026**
(21) Application number: 25150627.5
(22) Date of filing: 08.01.2025
(51) Int. Cl.: H01M 50/103, H01M 50/15, H01M 50/188, H01M 50/342, H01M 50/528, H01M 50/54, H01M 50/55, H01M 50/553, H01M 50/566, H01M 4/70

(54) **SECONDARY BATTERY, SECONDARY BATTERY MANUFACTURING METHOD, AND BATTERY PACK**

(30) Priority: 12.07.2024 KR 20240092308
(71) Applicant: Samsung SDI Co., Ltd, Gyeonggi-do 17084 (KR)
(72) Inventor: Yeom, Gil Choun, 16678 Suwon-si, Gyeonggi-do (KR)
(74) Representative: Gulde & Partner

(57) **Abstract**

The present disclosure relates to a secondary battery, a secondary battery manufacturing method, and a battery pack, in which defects in bonding of an electrode can be prevented or substantially prevented and power efficiency is increased. To this end, the present disclosure provides a secondary battery including a case, an electrode assembly disposed inside the case and having a first electrode and a second electrode, a first tab member connected to the first electrode and having a first insertion hole, a cap plate coupled to the case and disposed to face the electrode assembly, a first inner current collector inserted into the first insertion hole, a first outer current collector disposed to face the first inner current collector with the first tab member interposed therebetween, and a first terminal connected to the first outer current collector and extending outward from the cap plate.

## Description

### BACKGROUND

### 1. Field

The present disclosure relates to a secondary battery, a secondary battery manufacturing method, and a battery pack.

### 2. Description of the Related Art

In general, due to the recent proliferation (e.g., rapid growth) of electronic devices using batteries (e.g., battery powered electronic devices), such as mobile phones, notebook computers, and electric vehicles, the demand for secondary batteries having high energy density and high capacity has rapidly increased. Accordingly, research and development for improving the performance of a lithium secondary battery are being actively conducted.

A lithium secondary battery is a battery including a positive electrode and a negative electrode, each including an active material capable of intercalating and deintercalating lithium ions, and an electrolyte solution. The lithium secondary battery generates energy through oxidation/reduction reactions as lithium ions are intercalated/deintercalated at the positive and negative electrodes.

The information described above regarding the technology that forms the background of the present disclosure is only intended to improve understanding of the background of the present disclosure, and thus may include information that does not constitute the prior art.

### SUMMARY

Aspects according to some embodiments are directed toward a secondary battery, a secondary battery manufacturing method, and a battery pack, in which defects in bonding of an electrode can be prevented or substantially prevented and power efficiency is increased.

Aspects according to some embodiments are directed toward a secondary battery and a battery pack including the same, in which an installation space of electronic parts can be secured.

These and other aspects and features of the present disclosure will be described in or will be apparent from the following description of some embodiments of the present disclosure. Additional aspects will be set forth in part in the description which follows and, in part, will be apparent from the description, or may be learned by practice of the presented embodiments of the disclosure.

A secondary battery according to the present disclosure includes a case, an electrode assembly disposed inside the case and having a first electrode and a second electrode, a first tab member connected to the first electrode and having a first insertion hole, a cap plate coupled to the case and disposed to face the electrode assembly, a first inner current collector inserted into the first insertion hole, a first outer current collector disposed to face the first inner current collector with the first tab member interposed therebetween, and a first terminal connected to the first outer current collector and extending outward from the cap plate.

The first tab member may include a plurality of first tabs extending from the first electrode in a first direction and arranged in a second direction intersecting the first direction, and the first insertion hole may pass through the plurality of first tab members in the second direction.

A thickness of the first tab member parallel to the second direction may decrease toward an end portion of the first tab member.

The first inner current collector may include a first inner plate inserted into the first insertion hole and disposed parallel to the second direction, and a first inner guide part extending obliquely from the first inner plate in the first direction.

The first tab member may include a first inner surface disposed to surround the first insertion hole and facing a direction opposite to the first direction, and the first inner plate may be in contact with the first inner surface.

An end portion of the first inner plate may protrude outward from the first insertion hole, and the first inner guide part may be disposed on the end portion of the first inner plate.

The first inner guide part may be provided as a pair of first inner guide parts and the pair of first inner guide parts may be respectively disposed on both end portions of the first inner plate.

A distance between the pair of first inner guide parts may increase toward an end portion of the first inner guide part.

The first outer current collector may include a first outer plate disposed between the first tab member and the cap plate, and a first outer guide part extending obliquely from the first outer plate in a direction opposite to the first direction.

The first tab member may include a first outer surface disposed outside the first insertion hole and facing the first direction, and the first outer plate may be in contact with the first outer surface.

The first inner guide part and the first outer guide part may be alternately disposed in a third direction that intersects the first direction and the second direction.

The first outer current collector may further include a first connecting member connected to the first outer plate and supporting the first terminal.

The first connecting member may include a first bending portion that is bendable in the third direction that intersects the first direction and the second direction.

The first outer plate may include a first center plate in contact with the first tab member, a first accommodating portion disposed to face the first center plate, and a first extension plate extending from the first center plate in the first direction and disposed to surround the first accommodating portion, and the first connecting member may be inserted into the first accommodating portion.

The secondary battery may further include a second tab member connected to the second electrode and having a second insertion hole, a second inner current collector inserted into the second insertion hole, a second outer current collector disposed to face the second inner current collector with the second tab member interposed therebetween, and a second terminal connected to the second outer current collector and extending outward from the cap plate.

A secondary battery manufacturing method includes forming a first tab member, forming a first insertion hole in the first tab member, inserting a first inner current collector into the first insertion hole, bringing a first outer current collector into contact with the first tab member, and bonding the first tab member, the first inner current collector, and the first outer current collector.

The method may further include, after the inserting of the first inner current collector into the first insertion hole, bringing the first inner current collector into contact with the first tab member.

The method may further include, after the bringing of the first outer current collector into the first tab member, pressing the first outer current collector toward the first inner current collector.

The method may further include compressing the first tab member to reduce an area of a first outer surface of the first tab member.

A battery pack according to the present disclosure includes a housing, and a plurality of secondary batteries disposed inside the housing, wherein the secondary battery includes a case, an electrode assembly disposed inside the case and having a first electrode and a second electrode, a first tab member connected to the first electrode and having a first insertion hole, a cap plate coupled to the case and disposed to face the electrode assembly, a first inner current collector inserted into the first insertion hole, a first outer current collector disposed to face the first inner current collector with the first tab member interposed therebetween, and a first terminal connected to the first outer current collector and extending outward from the cap plate.

### BRIEF DESCRIPTION OF THE DRAWINGS

The accompanying drawings illustrate some embodiments of the present disclosure, and further describe aspects and features of the present disclosure together with the detailed description of the present disclosure. However, the present disclosure should not be construed as being limited to the drawings:
FIG. 1 is a schematic perspective view showing a configuration of a secondary battery according to one embodiment of the present disclosure;
FIG. 2 is a schematic exploded perspective view showing the configuration of the secondary battery according to one embodiment of the present disclosure;
FIG. 3 is a schematic perspective view showing a configuration of an electrode assembly according to one embodiment of the present disclosure;
FIG. 4 is a schematic exploded perspective view showing the configuration of the electrode assembly according to one embodiment of the present disclosure;
FIG. 5 is a schematic perspective view showing an installed state of a first current collector and a first terminal according to one embodiment of the present disclosure;
FIG. 6 is an exploded perspective view of FIG. 5;
FIG. 7 is a cross-sectional view of FIG. 5;
FIG. 8 is a schematic view showing a configuration of a first inner current collector according to one embodiment of the present disclosure;
FIG. 9 is a schematic perspective view showing a configuration of a first outer current collector and the first terminal according to one embodiment of the present disclosure;
FIG. 10 is a front view of the first outer current collector and the first terminal of FIG. 9;
FIG. 11 is a side view of the first outer current collector and the first terminal of FIG. 9;
FIG. 12 is a schematic view showing a state in which a first bending portion in FIG. 11 is unfolded;
FIG. 13 is a schematic view showing a state in which a first bending plate in FIG. 11 is bent;
FIG. 14 is a schematic plan view showing the arrangement relationship between a first bending plate and a first gasket according to one embodiment of the present disclosure;
FIG. 15 is a schematic perspective view showing the installed state of the second current collector and the second terminal according to one embodiment of the present disclosure;
FIG. 16 is an exploded perspective view of the second current collector and the second terminal of FIG. 15;
FIG. 17 is a cross-sectional view of the second current collector and second first terminal of FIG. 15;
FIG. 18 is a schematic perspective view showing the configuration of the second outer current collector and the second terminal according to one embodiment of the present disclosure;
FIG. 19 is a front view of the second outer current collector and the second terminal of FIG. 18;
FIG. 20 is a side view of the second outer current collector and the second terminal of FIG. 18;
FIG. 21 is a schematic plan view showing the arrangement relationship between the first bending plate and the first gasket according to one embodiment of the present disclosure;
FIG. 22 is a flowchart showing a secondary battery manufacturing method according to one embodiment of the present disclosure;
FIG. 23 is a flowchart showing an operation of connecting a first electrode to a first terminal according to one embodiment of the present disclosure;
FIGS. 24 to 28 are schematic views showing a process of connecting the first electrode to the first terminal according to one embodiment of the present disclosure;
FIG. 29 is a flowchart showing an operation of connecting a second electrode to a second terminal according to one embodiment of the present disclosure;
FIG. 30 is a schematic exploded perspective view showing a configuration of a secondary battery according to another embodiment of the present disclosure;
FIG. 31 is a schematic view showing a state in which a first tab member, a first inner current collector, and a first outer current collector according to another embodiment of the present disclosure are bonded;
FIG. 32 is a schematic exploded perspective view showing a configuration of a battery pack according to one embodiment of the present disclosure; and
FIG. 33 is a schematic enlarged view showing an electrical connection configuration of the battery pack according to one embodiment of the present disclosure.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the drawings, dimensions of various elements, layers, etc., may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc., may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the drawings. It is to be understood that the spatially relative terms are intended to encompass different orientations of the device in use or operation in addition to the orientation depicted in the drawings. For example, if the device in the drawings is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to limit the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc., as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) "above (or below)" or "on (or under)" a component, it may mean that the arbitrary element is placed in contact with the upper (or lower) surface of the component and may also mean that another component may be interposed between the component and the arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

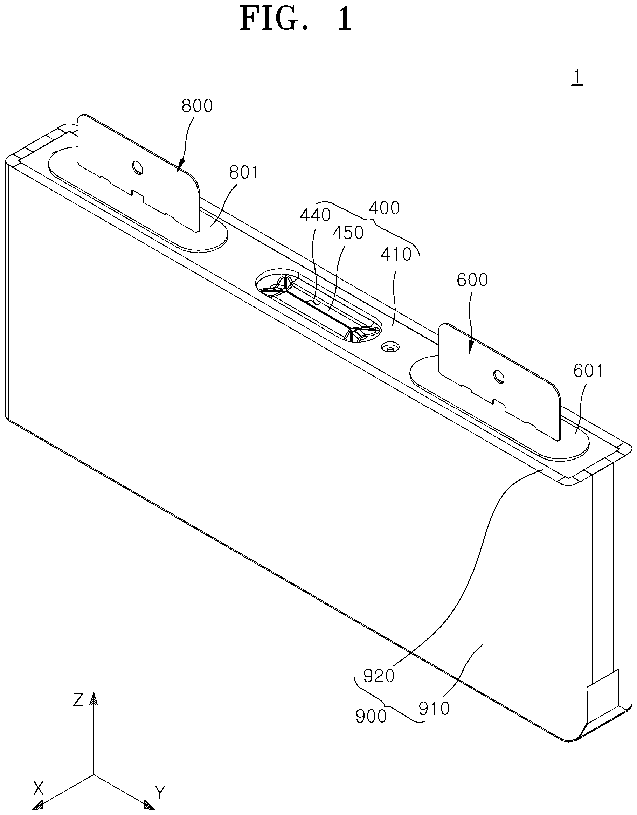

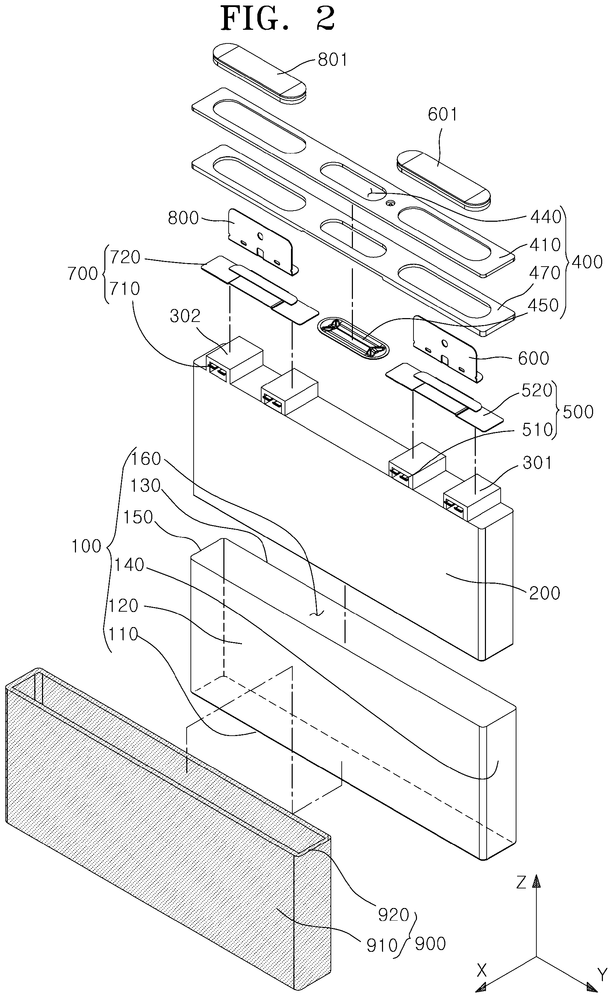

FIG. 1 is a schematic perspective view showing a configuration of a secondary battery according to one embodiment of the present disclosure, and FIG. 2 is a schematic exploded perspective view showing the configuration of the secondary battery according to one embodiment of the present disclosure.

Hereinafter, an example in which the secondary battery is a prismatic battery as a lithium ion secondary battery will be described. However, the present disclosure is not limited thereto, and the secondary battery may be a lithium polymer battery or cylindrical battery.

Referring to FIGS. 1 and 2, a secondary battery 1 according to the present embodiment includes a case 100, an electrode assembly 200, a first tab member 301, a cap assembly 400, a first current collector 500, and a first terminal 600.

The case 100 may form an exterior (e.g., rough exterior or durable exterior) of the secondary battery 1 and accommodate the electrode assembly 200.

The case 100 according to the present embodiment may include a bottom portion 110, a front portion 120, a rear portion 130, a first side portion 140, and a second side portion 150.

The bottom portion 110 may form an exterior of a lower side (see FIG. 2) of the case 100. The bottom portion 110 according to the present embodiment may have a rectangular plate shape. The bottom portion 110 may be seated (e.g., placed) on a bottom surface of the housing body 21.

The front portion 120, the rear portion 130, the first side portion 140, and the second side portion 150 may form an exterior of a perimetric surface of the case 100.

The front portion 120, the rear portion 130, the first side portion 140, and the second side portion 150 according to the present embodiment may have a plate shape that extends upward (see FIG. 2) from an edge of the bottom portion 110. The front portion 120, the rear portion 130, the first side portion 140, and the second side portion 150 may be disposed to surround an upper space of the bottom portion 110. The front portion 120, the rear portion 130, the first side portion 140, and the second side portion 150 may be disposed to form a rectangular cross-sectional shape.

The front portion 120 and the rear portion 130 according to the present embodiment may extend from a long side section of the bottom portion 110. The front portion 120 and the rear portion 130 may be disposed in parallel or substantially parallel. The term "substantially parallel" means a deviation of +/- 10 degrees. Areas of the front portion 120 and the rear portion 130 may be the same or substantially the same. The term "substantially the same area" means a deviation with respect to the area of +/- 10%.

The first side portion 140 and the second side portion 150 according to the present embodiment may extend from a short side section of the bottom portion 110. The first side portion 140 and the second side portion 150 may be disposed perpendicular or substantially perpendicular to the front portion 120 and the rear portion 130. The term "substantially perpendicular" means a deviation of +/- 10 degrees from 90 degrees. The first side portion 140 and the second side portion 150 may be disposed in parallel or substantially parallel. Areas of the first side portion 140 and the second side portion 150 may be the same or substantially parallel. The areas of the first side portion 140 and the second side portion 150 may be smaller than the areas of the front portion 120 and the rear portion 130.

The case 100 according to the present embodiment may further include an opening 160. The opening 160 according to the present embodiment may be a space surrounded by upper end portions of the front portion 120, the rear portion 130, the first side portion 140, and the second side portion 150. The opening 160 may interconnect an internal space and an external space of the case 100.

Therefore, the case 100 according to the present embodiment may have a rectangular parallelepiped shape with an open upper side.

A first direction to be described below may be a direction that is parallel to a Z-axis based on FIGS. 1 and 2 and directed from the bottom portion 110 to the opening 160. A second direction may be a direction that is parallel to an X-axis based on FIGS. 1 and 2 and directed from the front portion 120 toward the rear portion 130. A third direction may be a direction that is parallel to a Y-axis based on FIGS. 1 and 2 and directed from the first side portion 140 toward the second side portion 150.

The electrode assembly 200 may function as a unit structure that performs charging and discharging operations of power in the secondary battery 1. The electrode assembly 200 may be accommodated inside the case 100.

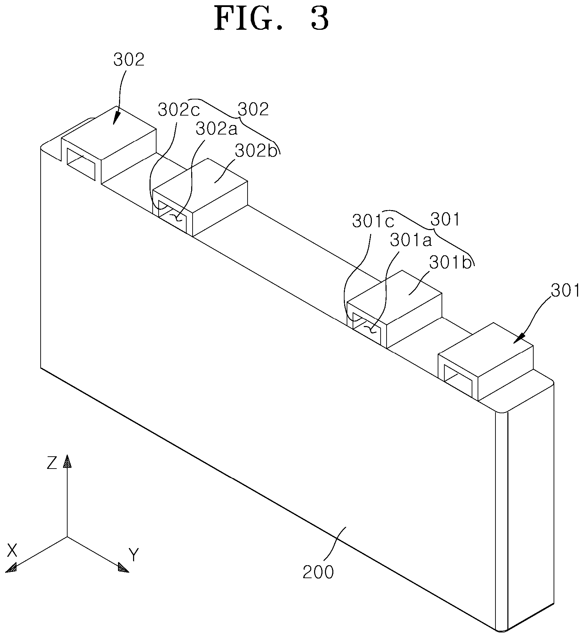

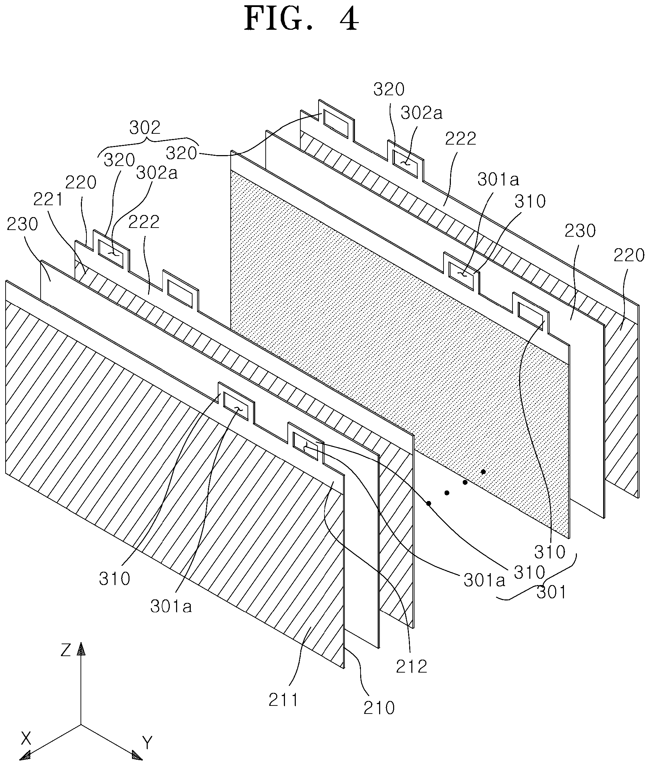

FIG. 3 is a schematic perspective view showing a configuration of an electrode assembly according to one embodiment of the present disclosure, and FIG. 4 is a schematic exploded perspective view showing the configuration of the electrode assembly according to one embodiment of the present disclosure.

Referring to FIGS. 1 to 4, the electrode assembly 200 according to the present embodiment may include a first electrode 210, a second electrode 220, and a separator 230 disposed between the first electrode 210 and the second electrode 220. The first electrode 210, the separator 230, and the second electrode 220 may be provided in plural.

Hereinafter, an example in which the electrode assembly 200 has a stacked form in which the plurality of first electrodes 210, separators 230, and second electrodes 220 are sequentially stacked in the second direction will be described. However, the electrode assembly 200 is not limited thereto, and may be formed to have a form in which the first electrodes 210, the separators 230, and the second electrodes 220 in a stacked state are wound around a winding shaft clockwise or counterclockwise.

The first electrode 210 may function as one of a positive electrode or a negative electrode of the electrode assembly 200. Hereinafter, an example in which the first electrode 210 is the positive electrode of the electrode assembly 200 will be described. However, the first electrode 210 is not limited thereto and may function as the negative electrode of the electrode assembly 200.

The first electrode 210 according to the present embodiment may be formed to have a foil shape including a metallic material such as aluminum or an aluminum alloy. The type, size, shape, etc., of the first electrode 210 are not particularly limited as long as the first electrode 210 has conductivity without causing a chemical change in the secondary battery. A cross-sectional shape of the first electrode 210 may be changed in design to have any of various shapes other than the rectangular shape.

A plurality of first electrodes 210 may be provided. The plurality of first electrodes 210 may be arranged in the second direction between the front portion 120 and the rear portion 130 of the case 100. The number of first electrodes 210 may be variously changed in design depending on the charging capacity, etc., of the secondary battery 1.

At least a portion of the first electrode 210 may be coated with a first active material layer 211. Both surfaces of the first electrode 210 may be coated with the first active material layer 211, or alternatively, only one surface of the first electrode 210 may be coated with the first active material layer 211.

In the present embodiment, because the first electrode 210 functions as a positive electrode, the first active material layer 211 may include a positive electrode active material.

The positive electrode active material may be a compound capable of reversible intercalation and deintercalation lithium (lithiated intercalation compound). For example, as the positive electrode active material, one or more of composite oxides of lithium and a metal selected from the group consisting of cobalt, manganese, nickel, iron, and a combination thereof may be used.

As a non-limiting example, the positive electrode active material may include at least one of lithium-iron-phosphorus oxide (LiFePO₄, LFP), lithium-manganese-iron-phosphorus oxide (LiMnFePO₄, LMFP), or lithium-nickel-cobalt-manganese oxide (LiNixCoyMnzO₂, NCM). Here, 0<x<1, 0<y<1, 0<z<1, and x+y+z=1 may be satisfied. The positive electrode active material may include only one of lithium-iron-phosphorus oxide (LiFePO₄, LFP), lithium-manganese-iron-phosphorus oxide (LiMnFePO₄, LMFP), or lithium-nickel-cobalt-manganese oxide (LiNixCoyMnzO₂, NCM), or may include two or all of lithium-iron-phosphorus oxide (LiFePO₄, LFP), lithium-manganese-iron-phosphorus oxide (LiMnFePO₄, LMFP), and lithium-nickel-cobalt-manganese oxide (LiNixCoyMnzO₂, NCM).

The first active material layer 211 may further include a positive electrode conductive material.

The positive electrode conductive material is used to impart conductivity to the first active material layer 211, and any material that is an electronically conductive material without causing a chemical change may be used. Examples of the positive electrode conductive material may include carbon-based materials such as natural graphite, artificial graphite, carbon black, acetylene black, Ketjen black, carbon fibers, carbon nanofibers, and carbon nanotubes, metal-based materials in the form of metal powder or metal fibers containing copper, nickel, aluminum, silver, etc., conductive polymers such as polyphenylene derivatives, or a mixture thereof.

The first active material layer 211 may further include a positive electrode binder.

The positive electrode binder serves to attach (e.g., well attach) particles constituting the positive electrode active material and also serves to attach (e.g., well attach) the positive electrode active material to the first electrode 210.

Examples of the positive electrode binder include a non-aqueous binder (e.g., a solvent-based binder), an aqueous binder, a dry binder, or a combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from among styrene-butadiene rubber, (meth)acrylated styrene-butadiene rubber, (meth)acrylonitrile-butadiene rubber, (meth)acrylic rubber, butyl rubber, fluoroelastomer, polyethylene oxide, polyvinylpyrrolidone, polyepichlorohydrin, polyphosphazene, poly(meth)acrylonitrile, ethylene propylene diene copolymer, polyvinylpyridine, chlorosulfonated polyethylene, latex, polyester resin, (meth)acrylic resin, phenolic resin, epoxy resin, polyvinyl alcohol, and a combination thereof.

If (e.g., when) the aqueous binder is used as the positive electrode binder, the aqueous binder may further include a cellulose series compound capable of imparting viscosity. As the cellulose series compound, one or more of carboxymethyl cellulose, hydroxypropylmethyl cellulose, methyl cellulose, and an alkali metal salt thereof may be mixed and used. The alkali metal may be Na, K, or Li.

The dry binder may be a polymer material capable of fiberization (e.g., taken the form of a fiber), for example, polytetrafluoroethylene, polyvinylidene fluoride, polyvinylidene fluoride-hexafluoropropylene copolymer, polyethylene oxide, or a combination thereof.

The first electrode 210 may include a first uncoated portion 212 uncoated (not coated) with the first active material layer 211. The first uncoated portion 212 according to the present embodiment may be disposed in an upper end portion region of the first electrode 210 disposed to face the opening 160 inside the case 100. However, the first uncoated portion 212 is not limited thereto and may be formed over the entire edge region of the first electrode 210.

The second electrode 220 may function as one of a positive electrode or negative electrode of the electrode assembly 200. Hereinafter, an example in which the second electrode 220 is the negative electrode of the electrode assembly 200 will be described. However, the second electrode 220 is not limited thereto and may function as the positive electrode of the electrode assembly 200.

A plurality of second electrodes 220 may be provided. The plurality of second electrodes 220 may be arranged in the second direction between the front portion 120 and the rear portion 130 of the case 100. The first electrode 210 and the second electrode 220 may be alternately disposed in the second direction. The second electrode 220 may be spaced a set or predetermined distance from the first electrode 210 in the second direction.

The second electrode 220 according to the present embodiment may be formed to have a foil shape including a metallic material such as copper, a copper alloy, nickel, or a nickel alloy. The type, size, shape, etc., of the second electrode 220 are not particularly limited as long as the second electrode 220 has conductivity without causing a chemical change in secondary battery. A cross-sectional shape of the second electrode 220 may be changed in design to have any of various shapes other than the rectangular shape.

At least a portion of the second electrode 220 may be coated with a second active material layer 221. Both surfaces of the second electrode 220 may be coated with the second active material layer 221, or alternatively, only one surface of the second electrode 220 may be coated with the second active material layer 221.

Because the second electrode 220 functions as a negative electrode, the second active material layer 221 may include a negative electrode active material.

The negative electrode active material may include a material capable of reversible intercalation/deintercalation lithium ions, a lithium metal, a lithium metal alloy, a material capable of doping and dedoping lithium, or a transition metal oxide.

The material capable of reversible intercalation/deintercalation lithium ions may include a carbon-based negative electrode active material, for example, crystalline carbon, amorphous carbon, or a combination thereof. Examples of the crystalline carbon may include graphite such as amorphous, plate-like, flake-like, spherical, or fiber-like natural graphite or artificial graphite, and examples of the amorphous carbon may include soft carbon, hard carbon, mesophase pitch carbide, calcined coke, etc.

As the lithium metal alloy, an alloy of lithium and a metal selected from among Na, K, Rb, Cs, Fr, Be, Mg, Ca, Sr, Si, Sb, Pb, In, Zn, Ba, Ra, Ge, Al, and Sn may be used.

As a material capable of doping and dedepoing lithium, a Si-based negative electrode active material or a Sn-based negative electrode active material may be used. The Si-based negative electrode active material may be silicon, a silicon-carbon composite, SiOₓ (0<x≤2), a Si-Q alloy (Q is selected from among an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnOₓ (0 < x ≤ 2, e.g., SnO₂), an Sn-based alloy, or a combination thereof.

The silicon-carbon composite may be a composite of silicon and amorphous carbon. According to one embodiment, the silicon-carbon composite may be in the form of silicon particles and amorphous carbon coated on surfaces of the silicon particles. For example, the silicon-carbon composite may include a secondary particle (core) in which primary silicon particles are agglomerated and an amorphous carbon coating layer (shell) located on a surface of the secondary particle. The amorphous carbon may be located between the primary silicon particles, for example, so that the primary silicon particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on a surface of the core.

The Si-based negative electrode active material or Sn-based negative electrode active material may be used in combination with a carbon-based negative electrode active material.

The second active material layer 221 may further include a negative electrode conductive material and a negative electrode binder.

The negative electrode conductive material is used to impart conductivity to the second active material layer 221, and any material that is an electrically conductive material without causing a chemical change may be used. Examples of the negative electrode conductive material may include carbon-based materials such as natural graphite, artificial graphite, carbon black, acetylene black, Ketjen black, carbon fibers, carbon nanofibers, and carbon nanotubes, metal-based materials in the form of metal powder or metal fibers containing copper, nickel, aluminum, silver, etc., conductive polymers such as polyphenylene derivatives, or a mixture thereof.

The negative electrode binder serves to attach (e.g., well attach) particles constituting the negative electrode active material and also serves to attach (e.g., well attach) the negative electrode active material to the second electrode 220.

Examples of the negative electrode binder include a non-aqueous binder (e.g., solvent-based binder), an aqueous binder, a dry binder, or a combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from among styrene-butadiene rubber, (meth)acrylated styrene-butadiene rubber, (meth)acrylonitrile-butadiene rubber, (meth)acrylic rubber, butyl rubber, fluoroelastomer, polyethylene oxide, polyvinylpyrrolidone, polyepichlorohydrin, polyphosphazene, poly(meth)acrylonitrile, ethylene propylene diene copolymer, polyvinylpyridine, chlorosulfonated polyethylene, latex, polyester resin, (meth)acrylic resin, phenolic resin, epoxy resin, polyvinyl alcohol, and a combination thereof.

If (e.g., when) the aqueous binder is used as the negative electrode binder, the aqueous binder may further include a cellulose series compound capable of imparting viscosity. As the cellulose series compound, one or more of carboxymethyl cellulose, hydroxypropylmethyl cellulose, methyl cellulose, and an alkali metal salt thereof may be mixed and used. The alkali metal may be Na, K, or Li.

The dry binder may be a polymer material capable of fiberization (e.g., taken the form of a fiber), for example, polytetrafluoroethylene, polyvinylidene fluoride, polyvinylidene fluoride-hexafluoropropylene copolymer, polyethylene oxide, or a combination thereof.

The second electrode 220 may include a second uncoated portion 222 uncoated (e.g., not coated) with the second active material layer 221. The second uncoated portion 222 according to the present embodiment may be disposed in an upper end portion region of the second electrode 220 disposed to face the opening 160 inside the case 100. However, the second uncoated portion 222 is not limited thereto and may be formed over the entire edge region of the second electrode 220.

The separator 230 may be disposed between the first electrode 210 and the second electrode 220. The separator 230 may function to prevent or substantially prevent a short between the first electrode 210 and the second electrode 220 while allowing the movement of lithium ions between the first electrode 210 and the second electrode 220.

The separator 230 may be disposed to entirely cover a surface region of the electrode assembly 200. For example, the surface area of the separator 230 may be the same as or larger than that of the first electrode 210 and the second electrode 220. Therefore, the separator 230 may prevent or substantially prevent the first electrode 210 and the second electrode 220 from being directly exposed to the outside of the electrode assembly 200.

As the separator 230, a multilayered membrane of two or more layers of polyethylene, polypropylene, polyvinylidene fluoride, and/or the like, may be used, and a mixed multilayered membrane such as a two-layer separator of polyethylene/polypropylene, a three-layer separator of polyethylene/polypropylene/polyethylene, or a three-layer separator of polypropylene/polyethylene/polypropylene may be used.

The separator 230 may include a porous substrate and a coating layer including an organic material, an inorganic material, or a combination thereof, which is located on one surface or both surfaces of the porous substrate.

The porous substrate may be a polymer film made of one polymer selected from among polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, cyclic olefin copolymer, polyphenylene sulfide, polyethylene naphthalate, glass fiber, and polytetrafluoroethylene (e.g., TEFLON), or a copolymer or mixture of two or more of the above materials.

The organic material may include a polyvinylidene fluoride-based polymer or a (meth)acryl-based polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and a combination thereof, but the present disclosure is not limited thereto.

The organic and inorganic materials may be mixed in one coating layer, or may present in a form in which a coating layer including an organic material and a coating layer including an inorganic material are stacked.

The first tab member 301 may be connected to the first electrode 210 and may protrude outward from the electrode assembly 200. As the first electrode 210 is exemplified as a positive electrode, the first tab member 301 may function as a positive electrode tab of the secondary battery 1. However, the first tab member 301 is not limited thereto, and if (e.g., when) the first electrode 210 is a negative electrode, the first tab member 301 may function as a negative electrode tab of the secondary battery 1.

The first tab member 301 according to the present embodiment may extend from the electrode assembly 200 in the first direction. That is, the first tab member 301 may extend toward the opening 160 from inside the case 100.

A plurality of first tab members 301 may be provided. The plurality of first tab members 301 may be arranged in the third direction. As a non-limiting example, a pair of first tab members 301 according to the present embodiment may be formed, and the pair of first tab members 301 may be disposed to be spaced at a set or predetermined distance from each other in the third direction.

The first tab member 301 according to the present embodiment may include a plurality of first tabs 310.

The first tab 310 according to the present embodiment may have a foil shape extending from the first uncoated portion 212 of the first electrode 210 in the first direction. The first tab 310 may have a substantially rectangular shape. However, the shape of the first tab 310 is not limited thereto and may be changed in design to have various shapes.

The first tab 310 may be formed integrally with the first electrode 210. For example, the first tab 310 may be the remaining region of the first uncoated portion 212 that remains after a partial region of the first uncoated portion 212 is cut or removed by a notching process, etc. Alternatively, the first tab 310 may be manufactured separately from the first electrode 210 and then connected to the first uncoated portion 212 by welding, etc. A material of the first tab 310 may be the same as the material of the first electrode 210.

The number of first tabs 310 may be the same as the number of first electrodes 210. Each of the first tabs 310 may extend from the first uncoated portion 212 of one of the first electrodes 210. The neighboring first tabs 310 may be disposed to face each other in the second direction. That is, the plurality of first tabs 310 may be arranged in the second direction. The neighboring first tabs 310 may be arranged in parallel. Therefore, the first tab member 301 according to the present embodiment may be an assembly of the plurality of first tabs 310 arranged in the second direction. The neighboring first tabs 310 may be in contact with each other and spaced apart from each other by the thickness of the separator 230.

The first tab member 301 according to the present embodiment may include a first insertion hole 301a.

The first insertion hole 301a may have a hole shape passing through the first tab member 301 in the second direction. A cross-sectional shape of the first insertion hole 301a may be changed in design to have various shapes, such as a circle, oval, and polygon, in addition to a quadrangular shape shown in FIGS. 3 and 4. A through hole having a shape corresponding to the first insertion hole 301a may be formed in each first tab 310. The first insertion hole 301a may be formed together with the first tab 310 in a notching process of the first electrode 210. However, the first insertion hole 301a is not limited thereto and may be formed in the first tab 310 through a separate punching process, etc., after the first tab 310 is manufactured.

A plurality of first insertion holes 301a may be provided. Each of the first insertion holes 301a may be formed in one of the first tab members 301. Although FIGS. 3 and 4 show an example in which one first insertion hole 301a is formed in each first tab member 301, the present disclosure is not limited thereto, and the plurality of first insertion holes 301a may be formed in each first tab member 301. In this case, the first insertion holes 301a may be separated from each other without being connected.

The first tab member 301 according to the present embodiment may further include a first outer surface 301b and a first inner surface 301c.

The first outer surface 301b may be a surface that is perpendicular to the first direction among outer surfaces of the first tab member 301 located outside the first insertion hole 301a and is located to face the opening 160.

The first inner surface 301c may be a surface that is perpendicular to the first direction among inner surfaces of the first tab member 301 located to surround the first insertion hole 301a and is located opposite to the first outer surface 301b.

The thickness of the first tab member 301 parallel to the second direction may decrease toward an end portion, that is, the first outer surface 301b. That is, the thickness of the first tab member 301 along the second direction may decrease towards the first outer surface 301b and the first outer surface 301b may have the smallest thickness along the second direction. As a non-limiting example, end portions of the plurality of first tabs 310 may be bent in a direction that converges toward a central portion of the first tab member 301. Here, the direction toward the central portion of the first tab member 301 may be a direction toward the first tab 310 located at the center among the plurality of first tabs 310 stacked in the second direction.

The secondary battery 1 according to the present embodiment may further include a second tab member 302.

The second tab member 302 may be connected to the second electrode 220 and may protrude outward from the electrode assembly 200. As a non-limiting example, the second electrode 220 is a negative electrode, and the second tab member 302 may function as a negative electrode tab of the secondary battery 1. However, the second tab member 302 is not limited thereto, and if (e.g., when) the second electrode 220 is a positive electrode, the second tab member 302 may function as a positive electrode tab of the secondary battery 1.

The second tab member 302 according to the present embodiment may extend from the electrode assembly 200 in the first direction. That is, the second tab member 302 may extend toward the opening 160 from inside the case 100. Hereinafter, although an example in which the second tab member 302 extends from the electrode assembly 200 in the first direction is described, the second tab member 302 is not limited thereto and may extend in a direction that differs from the first direction.

The first tab member 301 and the second tab member 302 may be disposed to be spaced apart from each other in the third direction. As a non-limiting example, the second tab member 302 may be disposed at a location that is spaced at a set or predetermined distance from the first tab member 301 in the third direction.

A plurality of second tab members 302 may be provided. The plurality of second tab members 302 may be arranged in the third direction. As a non-limiting example, a pair of second tab members 302 according to the present embodiment may be formed, and the pair of second tab members 302 may be disposed to be spaced at a set or predetermined distance from each other in the third direction.

The second tab member 302 may include a plurality of second tabs 320.

The second tab 320 according to the present embodiment may have a foil shape extending from the second uncoated portion 222 of the second electrode 220 in the first direction. The second tab 320 may have a substantially rectangular shape. However, the shape of the second tab 320 is not limited thereto and may be changed in design to have various shapes.

The second tab 320 may be formed integrally with the second electrode 220. For example, the second tab 320 may be the remaining region of the second uncoated portion 222 that remains after a partial region of the second uncoated portion 222 is cut or removed by a notching process, etc. Alternatively, the second tab 320 may be manufactured separately from the second electrode 220 and then connected to the second uncoated portion 222 by welding, etc. A material of the second tab 320 may be the same as the material of the second electrode 220.

The number of second tabs 320 may be the same as the number of second electrodes 220. Each of the second tabs 320 may extend from the second uncoated portion 222 of one of the second electrodes 220. The neighboring second tabs 320 may be disposed to face each other in the second direction. That is, the plurality of second tabs 320 may be arranged in the second direction. The neighboring second tabs 320 may be arranged in parallel. Therefore, the second tab member 302 according to the present embodiment may be an assembly of the plurality of second tabs 320 arranged in the second direction. The neighboring second tabs 320 may be in contact with each other and spaced apart from each other by the thickness of the separator 230.

The second tab member 302 according to the present embodiment may include a second insertion hole 302a.

The second insertion hole 302a may have a hole shape passing through the second tab member 302 in the second direction. A cross-sectional shape of the second insertion hole 302a may be changed in design to have various shapes, such as a circle, oval, and polygon, in addition to a quadrangular shape shown in FIGS. 3 and 4. A through hole having a shape corresponding to the second insertion hole 302a may be formed in each second tab 320. The second insertion hole 302a may be formed together with the second tab 320 in a notching process of the second electrode 220. However, the second insertion hole 302a is not limited thereto and may be formed in the second tab 320 through a separate punching process, etc., after the second tab 320 is manufactured.

A plurality of second insertion holes 302a may be provided. Each of the second insertion holes 302a may be formed in one of the second tab members 302. Although FIGS. 3 and 4 show an example in which one second insertion hole 302a is formed in each second tab member 302, the present disclosure is not limited thereto, and the plurality of second insertion holes 302a may be formed in each second tab member 302. In this case, the second insertion holes 302a may be separated from each other without being connected.

The second tab member 302 according to the present embodiment may further include a second outer surface 302b and a second inner surface 302c.

The second outer surface 302b may be a surface that is perpendicular to the first direction among outer surfaces of the second tab member 302 located outside the second insertion hole 302a and is located to face the opening 160.

The second inner surface 302c may be a surface that is perpendicular to the first direction among inner surfaces of the second tab member 302 located to surround the second insertion hole 302a and is located opposite to the second outer surface 302b.

The thickness of the second tab member 302 parallel to the second direction may decrease toward an end portion, that is, the second outer surface 302b. That is, the thickness of the second tab member 302 along the second direction may decrease towards the second outer surface 302b and the second outer surface 302b may have the smallest thickness along the second direction. As a non-limiting example, end portions of the plurality of second tabs 320 may be bent in a direction that converges toward a central portion of the second tab member 302. Here, the direction toward the central portion of the second tab member 302 may be a direction toward the second tab 320 located at the center among the plurality of second tabs 320 stacked in the second direction.

The cap assembly 400 may be coupled to the case 100 to seal the case 100.

The cap assembly 400 according to the present embodiment may include a cap plate 410.

The cap plate 410 may form an exterior (e.g., rough exterior or durable exterior) of the cap assembly 400.

The cap plate 410 according to the present embodiment may be formed to have a flat shape. The cap plate 410 may be disposed in the opening 160 of the case 100. The cap plate 410 may be disposed to face the electrode assembly 200 in the first direction. That is, the cap plate 410 may be disposed at a location that is spaced at a set or predetermined distance from the first outer surface 301b and the second outer surface 302b in the first direction. The cap plate 410 may be disposed parallel to the bottom portion 110 of the case 100.

The cap plate 410 may be seated (e.g., placed) on an upper end portion of the case 100, for example, on upper end portions of the front portion 120, the rear portion 130, the first side portion 140, and the second side portion 150. The cap plate 410 may be connected to the case 100 by any type of coupling method such as a welding, bolting, latching or fitting method.

The cap plate 410 may include a first surface 411 facing the electrode assembly 200 in the first direction and a second surface 412 opposite to the first surface 411. The second surface of the cap plate 410 may be disposed to face an outer space of the secondary battery 1.

The cap assembly 400 according to the present embodiment may further include a vent hole 440 and a vent 450.

The vent hole 440 according to the present embodiment may be formed to have a hole shape that vertically passes through both surfaces of the cap plate 410 in the first direction. The vent hole 440 may function as a configuration that provides a path through which flames, gas, smoke, etc., formed inside the case 100 are discharged to the outside of the case 100 if (e.g., when) the secondary battery 1 experiences thermal runaway due to an overcurrent, etc. The vent hole 440 may be disposed in a central portion of the cap plate 410. A cross-sectional shape of the vent hole 440 may be changed in design to have any of various shapes such as oval, circle, or polygon.

The vent 450 may be installed in the vent hole 440 and opened and closed in conjunction with a change in internal pressure of the case 100. That is, the vent 450 may close the vent hole 440 if (e.g., when) the secondary battery 1 operates normally to block an electrolyte inside the case 100 from leaking to the outside of the case 100, or moisture, foreign substances, etc., from flowing into the case 100. The vent 450 may open the vent hole 440 if (e.g., when) the secondary battery 1 experiences thermal runaway to guide flames, gas, smoke, etc., formed inside the case 100 to be discharged to the outside of the case 100.

The vent 450 according to the present embodiment may be formed to have substantially a plate shape. The vent 450 may be fixed to the cap plate 410 by any type of coupling method such as a welding, bolting, or fitting method. The vent 450 may be disposed inside the vent hole 440 or disposed to face the vent hole 440 in the first direction above or below the cap plate 410.

The thickness of the vent 450 parallel to the first direction may be smaller than the thickness of the cap plate 410. Therefore, the vent 450 may be easily ruptured or broken if (e.g., when) the internal pressure of the case 100 increases. The vent 450 may include a notch that is formed to be concave inward from the vent 450 to be preferentially ruptured if (e.g., when) the internal pressure of the case 100 increases.

The cap assembly 400 according to the present embodiment may further include an electrolyte injection port which is formed to pass through the cap plate 410 and at which a sealing plug may be installed. The electrolyte injection port may be disposed to be spaced at a set or predetermined distance from the vent hole 440 in the third direction or in a direction opposite to the third direction.

The cap assembly 400 according to the present embodiment may further include an insulating plate 470.

The insulating plate 470 may be disposed between the cap plate 410 and the electrode assembly 200. The insulating plate 470 may prevent direct contact between the cap plate 410 and the electrode assembly 200 to insulate the cap plate 410 from the electrode assembly 200. The insulating plate 470 may fix a location of the electrode assembly 200 inside the case 100. The insulating plate 470 can prevent or substantially prevent damage to the electrode assembly 200 if (e.g., when) the cap plate 410 is deformed to the inside of the case 100 (e.g., is dented towards the inside of the case 100) due to an external impact, etc.

The insulating plate 470 according to the present embodiment may be disposed to face the electrode assembly 200 in the first direction inside the case 100. That is, the electrode assembly 200, the insulating plate 470, and the cap plate 410 may be disposed sequentially in the first direction. The insulating plate 470 may be fixed to an inner surface of the case 100 by any type of coupling method such as a fitting, welding, bolting, or adhesion method. The insulating plate 470 may be in contact with one surface of the electrode assembly 200 from which the first tab member 301 and the second tab member 302 extend. The insulating plate 470 may be made of an insulating material such as polyethylene (PE), polypropylene (PP), polyethylene terephthalate (PET), or rubber.

The first current collector 500 may be disposed between the electrode assembly 200 and the cap plate 410 and connected to the first tab member 301. The first current collector 500 may function as a component that electrically connects the first tab member 301 to the first terminal 600. The first current collector 500 may be made of an electrically conductive material such as aluminum, copper, or nickel.

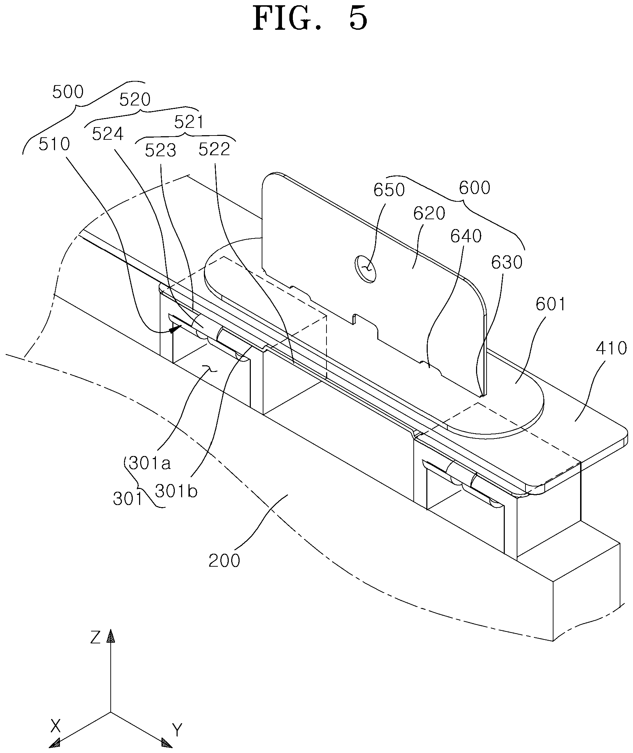

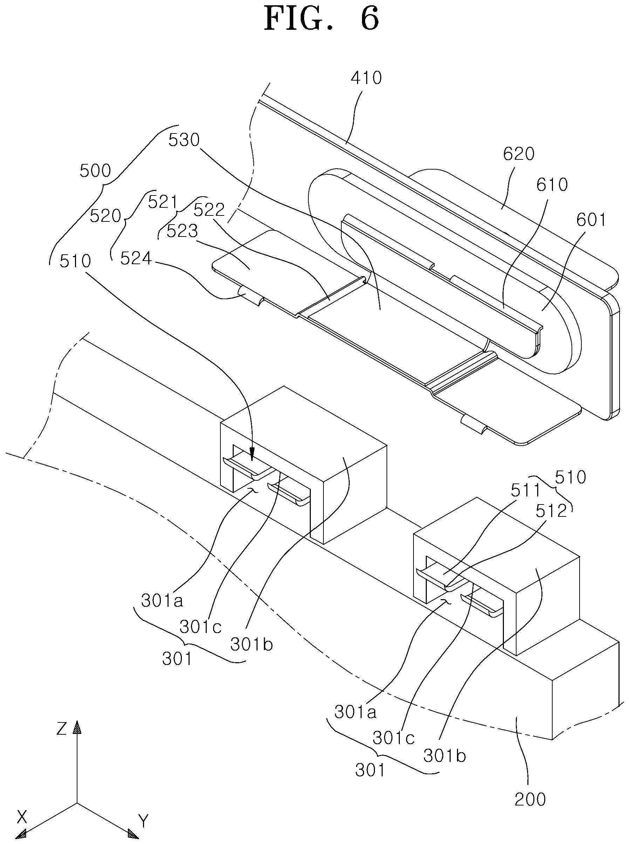

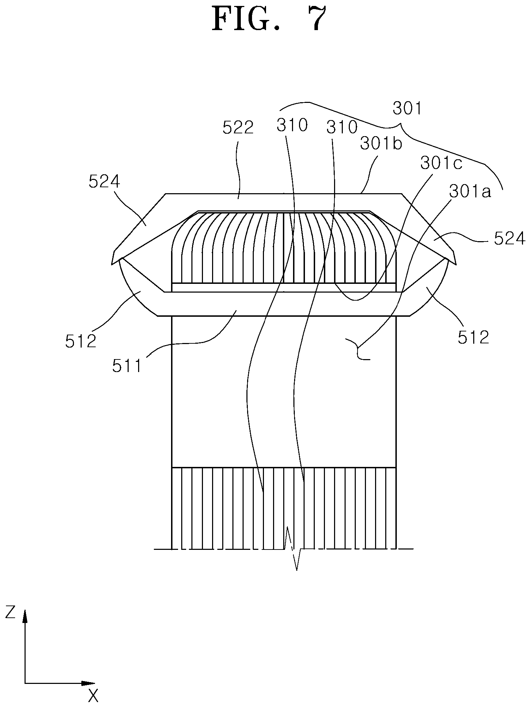

FIG. 5 is a schematic perspective view showing an installed state of a first current collector and a first terminal according to one embodiment of the present disclosure, FIG. 6 is an exploded perspective view of the first current collector and the first terminal of FIG. 5, and FIG. 7 is a cross-sectional view of the first current collector and the first terminal of FIG. 5.

Referring to FIGS. 1 to 7, the first current collector 500 according to the present embodiment may include a first inner current collector 510 and a first outer current collector 520.

The first inner current collector 510 may be inserted into the first insertion hole 301a. The first inner current collector 510 may function as a component that supports a plurality of first tab members 301 in the process of bonding the first outer current collector 520 and the first tab member 301 and aligns the locations of the plurality of first tab members 301.

A plurality of first inner current collectors 510 may be provided. At least one first inner current collector 510 may be inserted into each first insertion hole 301a. Although FIG. 5 shows an example in which two first inner current collectors 510 are inserted into each first insertion hole 301a, the number of first inner current collectors inserted into each first insertion hole 301a may be changed in design to 1, 3, etc., depending on an area, etc., of the first insertion hole 301a.

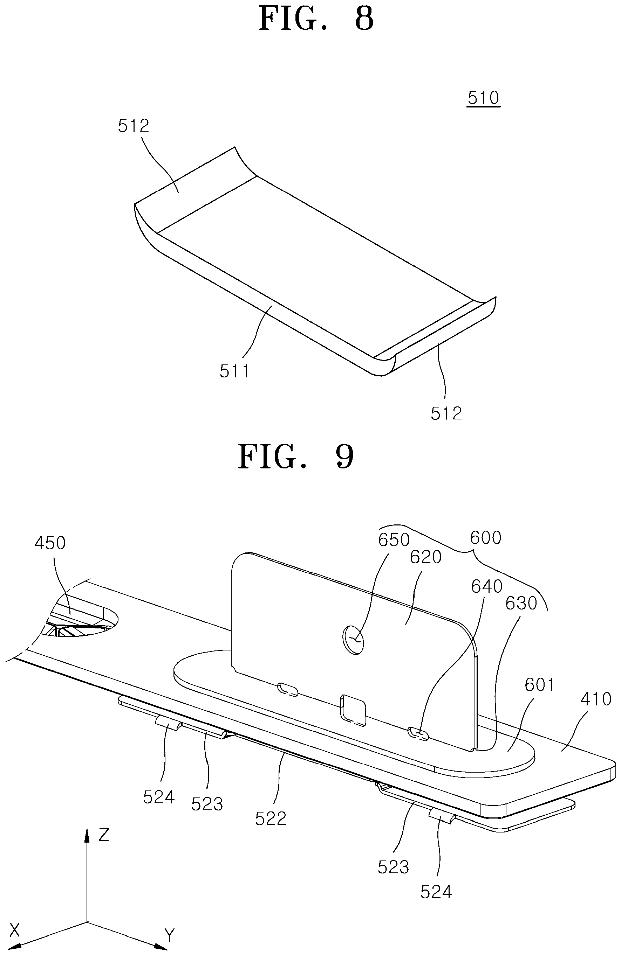

FIG. 8 is a schematic view showing a configuration of a first inner current collector according to one embodiment of the present disclosure.

Referring to FIGS. 1 to 8, the first inner current collector 510 according to the present embodiment may include a first inner plate 511 and a first inner guide part 512.

The first inner plate 511 may be inserted into the first insertion hole 301a and may have a plate shape disposed parallel to the second direction. A length of the first inner plate 511 parallel to the second direction may be greater than a depth of the first insertion hole 301a parallel to the second direction. Both end portions of the first inner plate 511 may protrude outward from the first insertion hole 301a in the second direction and a direction opposite to the second direction. One surface of the first inner plate 511 that is perpendicular to the first direction may be in contact with the first inner surface 301c. The first inner plate 511 may be bonded to the first tab member 301 by laser welding, etc.

The first inner guide part 512 may extend obliquely from the end portion of the first inner plate 511 in the first direction. That is, the first inner guide part 512 may have a hook shape that extends obliquely from the end portion of the first inner plate 511 toward the cap plate 410.

A pair of first inner guide parts 512 may be provided. The pair of first inner guide parts 512 may be disposed on both end portions of the first inner plate 511. A distance between the pair of first inner guide parts 512 may increase toward an end portion of the first inner guide part 512.

Each of the first inner guide parts 512 may be disposed to face both side surfaces of the first tab member 301 that are perpendicular to the second direction. Therefore, the first inner guide part 512 can prevent or substantially prevent an increase in area of the first outer surface 301b by restricting the unfolding of the plurality of first tabs 310 bent toward the central portion of the first tab member 301 by an inclined structure. That is, the two first inner guide parts 512 confine the first tab member 301 with their inclined structures. Therefore, the plurality of first tabs 310 that are bent toward the central portion of the first tab member 301 are restricted from separating from each other and thereby an increase in the area of the first outer surface 301b is restricted.

The first outer current collector 520 may be disposed outside the first tab member 301. The first outer current collectors 520 may be disposed to face the first inner current collectors 510 with the first tab member 301 interposed therebetween. The first outer current collector 520 may be connected to the first tab member 301. The first outer current collector 520 may function as a component that collects a current transmitted to the plurality of first tabs 310 through the first electrode 210 into one path.

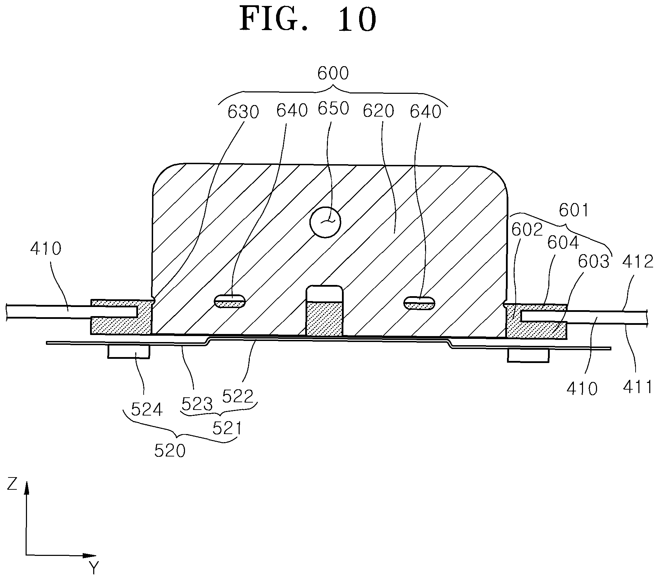

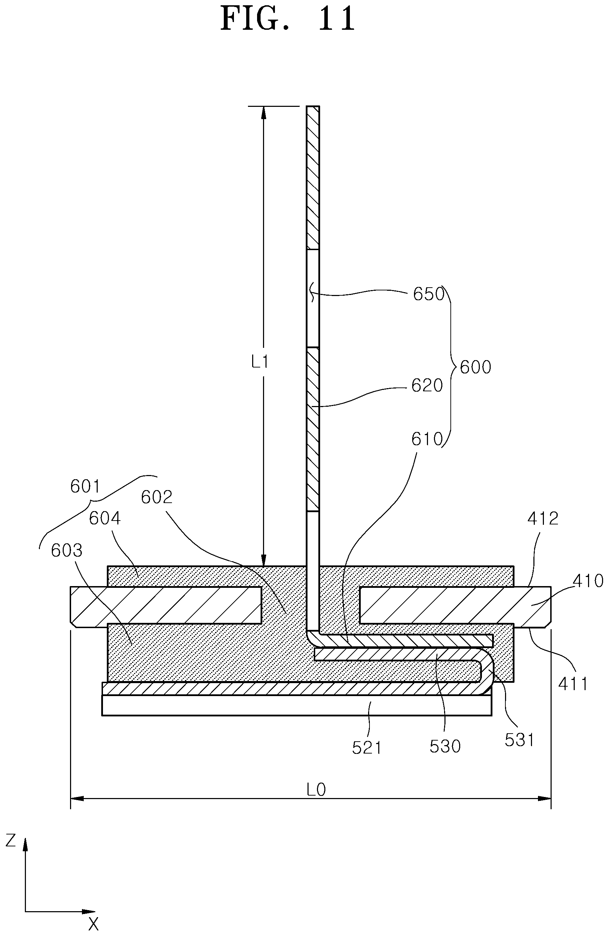

FIG. 9 is a schematic perspective view showing a configuration of a first outer current collector and the first terminal according to one embodiment of the present disclosure, FIG. 10 is a front view of the first outer current collector and the first terminal of FIG. 9, and FIG. 11 is a side view of the first outer current collector and the first terminal of FIG. 9.

Referring to FIGS. 1 to 11, the first outer current collector 520 according to the present embodiment may include a first outer plate 521 and a first outer guide part 524.

The first outer plate 521 may be disposed between the first tab member 301 and the cap plate 410. The first outer plate 521 may be in contact with the first outer surface 301b of the first tab member 301.

The first outer plate 521 according to the present embodiment may include a first center plate 522 and a first extension plate 523.

The first center plate 522 may form a central exterior of the first outer plate 521 and support the first extension plate 523.

The first center plate 522 according to the present embodiment may be disposed between the electrode assembly 200 and the cap plate 410. The first center plate 522 may be disposed to face the electrode assembly 200 in the first direction. As a non-limiting example, the first center plate 522 may be disposed to face one surface of the electrode assembly 200 located between the pair of neighboring first tab members 301.

Both end portions of the first center plate 522 may extend toward the electrode assembly 200. The two end portions of the first center plate 522 may pass through the insulating plate 470 and may be disposed on a lower side of the insulating plate 470.

The first extension plate 523 may extend from the first center plate 522 and may be in contact with the first tab member 301.

The first extension plate 523 according to the present embodiment may extend from the end portion of the first center plate 522 in a direction parallel to the third direction. The first extension plate 523 may be disposed to face the first tab member 301 in the first direction. The first extension plate 523 may be in contact with the first outer surface 301b of the first tab member 301 disposed to face the cap plate 410.

A pair of first extension plates 523 may be provided. The pair of first extension plates 523 may extend from both end portions of the first center plate 522 in the third direction and in a direction opposite to the third direction. Each of the first extension plates 523 may be in contact with the first outer surface 301b of one of the first tab members 301.

The first extension plate 523 may be bonded to the first tab member 301 by laser welding.

The first outer guide part 524 may extend obliquely from the first outer plate 521 in the direction opposite to the first direction.

The first outer guide part 524 according to the present embodiment may have a hook shape that extends obliquely from the first extension plate 523 toward the electrode assembly 200.

A plurality of first outer guide parts 524 may be provided. The first outer guide part 524 may be disposed between the pair of first inner guide parts 512 adjacent to each other in the third direction. That is, the first inner guide part 512 and the first outer guide part 524 may be alternately disposed in the third direction. Therefore, the first inner guide part 512 and the first outer guide part 524 may be configured so that the first inner plate 511 and the first outer plate 521 may be in contact (e.g., smoothly in contact) with the first inner surface 301c and the first outer surface 301b without any interference, respectively.

The first outer guide part 524 may be disposed symmetrically at both sides of the first extension plate 523 with respect to the third direction. A distance between the pair of first outer guide parts 524 disposed to face each other in the second direction may increase toward an end portion of the first outer guide part 524.

Each of the first outer guide parts 524 may be disposed to face both side surfaces of the first tab member 301 that are perpendicular to the second direction. Therefore, the first outer guide part 524 can prevent or substantially prevent an increase in area of the first outer surface 301b by restricting the unfolding of the plurality of first tabs 310 bent toward the central portion of the first tab member 301 together with the first inner guide part 512. That is, the two first outer guide parts 524, together with the two first inner guide parts 512, confine the first tab member 301 with their inclined structures. Therefore, the plurality of first tabs 310 that are bent toward the central portion of the first tab member 301 are restricted from separating from each other and thereby an increase in the area of the first outer surface 301b is restricted.

The first current collector 500 according to the present embodiment may further include a first connecting member 530.

The first connecting member 530 may be disposed between the first outer plate 521 and the first terminal 600. The first connecting member 530 may support the first terminal 600 with respect to the first outer plate 521. That is, the first connecting member 530 may function as a component that provides mechanical and electrical connection between the first outer plate 521 and the first terminal 600.

The two end portions of the first connecting member 530 according to the present embodiment may be connected to the first center plate 522 and the first support plate 610 of the first terminal 600, respectively.

A first bending portion 531 that movably supports the first terminal 600 with respect to the first outer plate 521 may be formed on a portion between two ends (e.g., a central portion) of the first connecting member 530.

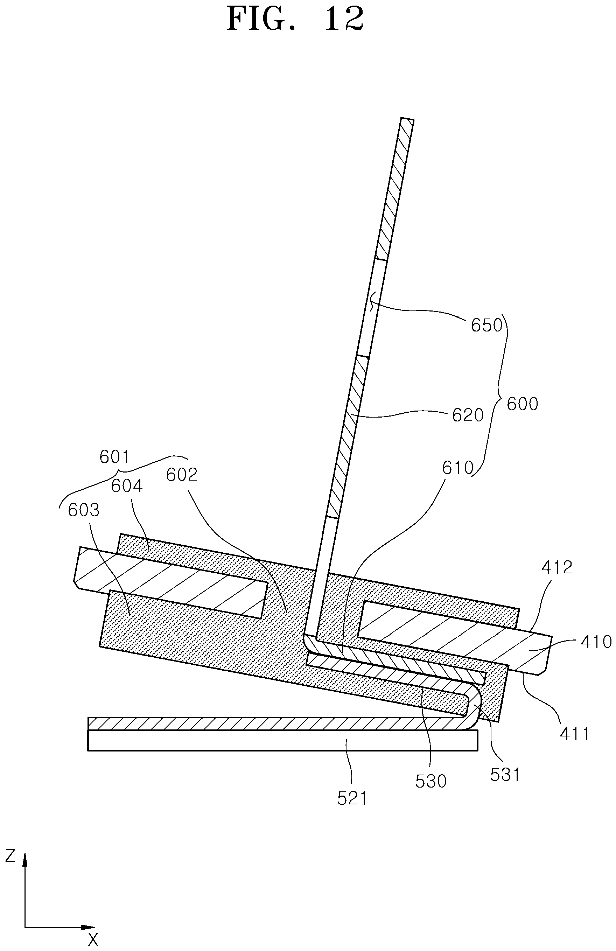

FIG. 12 is a schematic view showing a state in which a first bending portion is unfolded in FIG. 11.

Referring to FIGS. 11 and 12, the first bending portion 531 according to the present embodiment may be bent clockwise or counterclockwise in the third direction and may adjust the relative location of the first terminal 600 with respect to the first outer plate 521. As a non-limiting example, as the first bending portion 531 is bent counterclockwise as shown in FIG. 11, the first outer plate 521 and the first terminal 600 may be aligned in the first direction. Therefore, the secondary battery 1 according to the present embodiment may align the relative location of the first terminal 600 with respect to the first outer plate 521 using only a bending operation of the first bending portion 531 without an additional bonding process of the first outer plate 521 and the first terminal 600. Referring to FIG. 12, as the first bending portion 531 is unfolded clockwise, the first terminal 600 may move to the outside of the first outer plate 521, and an upper surface of the first outer plate 521 may be opened (e.g., exposed). Therefore, the first bending portion 531 can prevent or substantially prevent a welding device, etc., from interfering with the first terminal 600 if (e.g., when) the first outer plate 521 and the first tab member 301 are bonded. That is, as a non-limiting example, by adjusting the first bending portion 531, either by folding it counterclockwise or unfolding it clockwise, the relative position of the first terminal 600 with respect to the first outer plate 521 can be adjusted. This allows processes on the first outer plate 521, such as bonding with the first tab member 301, to be conducted without obstruction from the first terminal 600 or damaging the first terminal 600 by the welding device.

The first terminal 600 may extend from the first current collector 500 to the outside of the cap plate 410. The first terminal 600 may function as a component that connects the secondary battery 1 to an external electrical device, for example, another secondary battery 1, a busbar, etc.

The first terminal 600 may be provided to be deformable (e.g., bendable or flexible). Therefore, the first terminal 600 may have an adjustable location or extending direction by deforming its shape and may be directly connected to a terminal of another secondary battery 1 or an external busbar. The first terminal 600 may be made of an electrically conductive material such as copper, aluminum, or nickel. The material of the first terminal 600 may be the same as the material of the first current collector 500 or alternatively, may be different from the material of the first current collector 500.

The first terminal 600 according to the present embodiment may include a first support plate 610 and a first bending plate 620.

The first support plate 610 may form a side (e.g., one side exterior) of the first terminal 600 and support the first bending plate 620. The first support plate 610 may be connected to the first current collector 500.

The first support plate 610 according to the present embodiment may be formed to have a substantially flat plate shape. The first support plate 610 may be connected to the other end portion of the first connecting member 530 extending from the first center plate 522. The first support plate 610 may be manufactured separately from the first connecting member 530 and then connected to the first connecting member 530 by welding, etc. Alternatively, the first support plate 610 may be formed integrally with the first connecting member 530. The relative location of the first support plate 610 with respect to the first center plate 522 may be changed in conjunction with the bending operation of the first bending portion 531. The first support plate 610 may be disposed to face the first center plate 522 in a parallel manner in the first direction as the first bending portion 531 is bent (e.g., completely bent) counterclockwise (see FIG. 8). That is, by bending the first bending portion 531 counterclockwise such that the two ends of the first connecting member 530 on each side of the first bending portion 531 are parallel to each other, the first support plate 610 may face and be parallel or substantially parallel to the first center plate 522 along the first direction.

The first bending plate 620 may extend from the first support plate 610 and protrude outward from the cap plate 410.

The first bending plate 620 according to the present embodiment may be disposed to intersect the first support plate 610. As a non-limiting example, the first bending plate 620 may have a flat plate shape that extends from the first support plate 610 in the first direction in a state in which the first support plate 610 is disposed to face the first center plate 522 in a parallel manner in the first direction. An end portion of the first bending plate 620 may vertically pass through the first surface 411 and the second surface 412 of the cap plate 410 in the first direction and protrude to an external space of the cap plate 410.

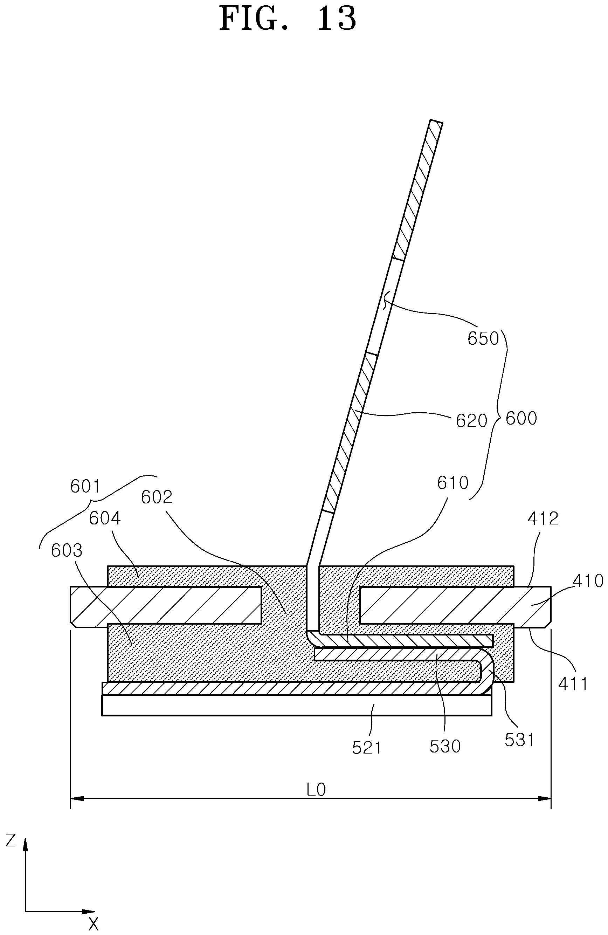

FIG. 13 is a schematic view showing a state in which a first bending plate in FIG. 11 is bent.

Referring to FIGS. 1 to 13, the first bending plate 620 may be provided to be bendable in the third direction. The first bending plate 620 may be bent clockwise or counterclockwise with respect to an arbitrary straight line parallel to the third direction by an external force applied from a user, a tool, etc. During a bending operation of the first bending plate 620, the end portion of the first bending plate 620 may protrude outward from the cap plate 410 in the second direction or a direction opposite to the second direction. Therefore, the first bending plate 620 may be in contact with and connected to an electrical device located outside the cap plate 410, for example, a terminal of another secondary battery 1 or a busbar.

The first terminal 600 according to the present embodiment may further include a first notch 630.

The first notch 630 may function as a component that guides the bending operation of the first bending plate 620.

The first notch 630 according to the present embodiment may have a groove shape that is concavely formed in a direction parallel to the third direction from an end surface of the first bending plate 620 that is perpendicular to the third direction. The first notch 630 may pass through both surfaces of the first bending plate 620 in the second direction. A length of the first bending plate 620 that is parallel to the third direction may be relatively reduced in a region in which the first notch 630 is formed. Therefore, bending stress applied to the first bending plate 620 is concentrated on the first notch 630, and the bending operation of the first bending plate 620 may be consistently performed based on the first notch 630. A cross-sectional shape of the first notch 630 may be changed in design to have any of various shapes such as polygon or oval other than the semicircular shape shown in FIG. 10.

A pair of first notches 630 may be provided. The pair of first notches 630 may be disposed symmetrically at both sides of the first bending plate 620. As a non-limiting example, the pair of first notches 630 may be formed concavely in the direction opposite to the third direction from one end portion of the first bending plate 620 disposed to face the third direction, and the remaining first notch 630 may be formed concavely in the third direction from the other end portion of the first bending plate 620 disposed to face the direction opposite to the third direction. The pair of first notches 630 may be disposed to face each other in the third direction. That is, the center lines of the pair of first notches 630 may be disposed to be located on one straight line parallel to the third direction.

The secondary battery 1 according to the present embodiment may further include a first gasket 601.

The first gasket 601 may electrically insulate the cap plate 410 and the first terminal 600. The first gasket 601 may block moisture or foreign substances from being introduced between the cap plate 410 and the first terminal 600. The first gasket 601 may be made of an insulating material such as polyethylene (PE), polypropylene (PP), polyethylene terephthalate (PET), or rubber. The first gasket 601 may be installed between the cap plate 410 and the first terminal 600 by insert injection molding.

The first gasket 601 according to the present embodiment may include a first gasket body 602, a first inner gasket 603, and a first outer gasket 604.

The first gasket body 602 may form a central exterior of the first gasket 601.

The first gasket body 602 according to the present embodiment may vertically pass through the first surface 411 and the second surface 412 of the cap plate 410. One end portion of the first gasket body 602 may protrude at a set or predetermined distance from the first surface 411 to the internal space of the case 100. The other end portion of the first gasket body 602 may protrude at a set or predetermined distance from the second surface 412 to the outside of the cap plate 410. The first gasket body 602 may be disposed to pass through the cap plate 410 and surround a lower end portion region of the first bending plate 620 located inside the cap plate 410.

The first inner gasket 603 may be disposed to extend from the first gasket body 602 and surround the first support plate 610.

The first inner gasket 603 according to the present embodiment may be connected to the one end portion of the first gasket body 602 protruding to the inner space of the case 100. The first inner gasket 603 may be disposed to entirely surround the first support plate 610 facing the first surface 411 of the cap plate 410. A cross-sectional area of the first inner gasket 603 that is perpendicular to the first direction may be larger than a cross-sectional area of the first gasket body 602 that is perpendicular to the first direction. The first inner gasket 603 may be in contact with the first surface 411 of the cap plate 410. Therefore, the first inner gasket 603 may be in contact with the first surface 411 to prevent or substantially prevent the first gasket 601 from being separated from the cap plate 410 in the first direction.

The first outer gasket 604 may be disposed to extend from the first gasket body 602 and surround the first bending plate 620.

The first outer gasket 604 according to the present embodiment may be connected to the other end portion of the first gasket body 602 protruding outward from the cap plate 410. The first outer gasket 604 may be disposed to surround the first bending plate 620 protruding from the second surface 412 of the cap plate 410. A height of the first outer gasket 604 may be equal to or lower than a height of the center line of the first notch 630. Therefore, the first outer gasket 604 may not interfere with the bending operation of the first bending plate 620 by exposing all or part of the first notch 630 to the outside.

A cross-sectional area of the first outer gasket 604 that is perpendicular to the first direction may be larger than the cross-sectional area of the first gasket body 602 that is perpendicular to the first direction. The first outer gasket 604 may be in contact with the second surface 412 of the cap plate 410. Therefore, the first outer gasket 604 may be in contact with the second surface 412 to prevent or substantially prevent the first gasket 601 from being separated from the cap plate 410 in the direction opposite to the first direction.

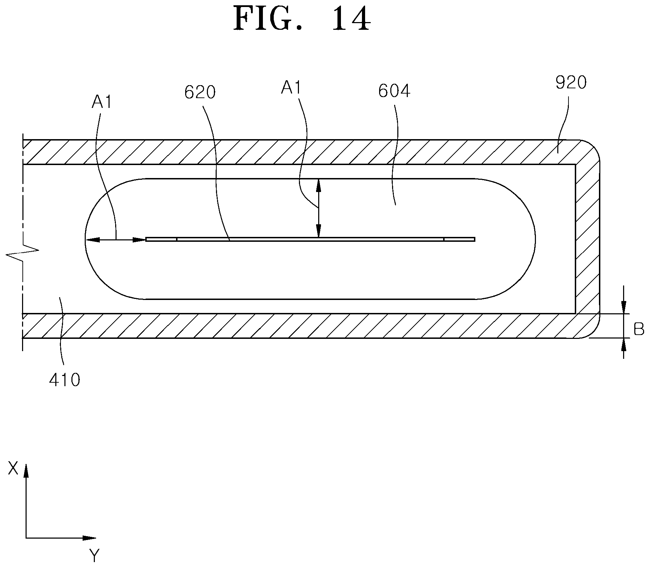

FIG. 14 is a schematic plan view showing the arrangement relationship between a first bending plate and a first gasket according to one embodiment of the present disclosure.

Referring to FIG. 14, a distance A1 from the first bending plate 620 to an outer perimetric surface of the first outer gasket 604 may be 3 mm or more. If (e.g., when) the distance A1 from the first bending plate 620 to the outer perimetric surface of the first outer gasket 604 is smaller than 3 mm, electrical insulation between the cap plate 410 and the first terminal 600 cannot be sufficiently secured. Various designs are possible within a range in which the distance A1 from the first bending plate 620 to the outer perimetric surface of the first outer gasket 604 is 3 mm or more and is smaller than a distance from the first bending plate 620 to an edge of the cap plate 410.

A ratio (L1/L0) of a protrusion length L1 of the first bending plate 620 to a width L0 of the cap plate 410 may be 0.5 or more and 1.0 or less. Here, if (e.g., when) the first bending plate 620 is disposed parallel to the first direction, the protrusion length L1 of the first bending plate 620 may be a length from an upper surface of the first outer gasket 604 or the center line of the first notch 630 to the end portion of the first bending plate 620. If (e.g., when) the ratio (L1/L0) of the protrusion length L1 of the first bending plate 620 to the width L0 of the cap plate 410 is smaller than 0.5, the length of the first bending plate 620 is excessively short, and thus smooth connection with an adjacent electrical device cannot be achieved. If (e.g., when) the ratio (L1/L0) of the protrusion length L1 of the first bending plate 620 to the width L0 of the cap plate 410 is greater than 1.0, the length of the first bending plate 620 is excessively long, and thus there is a concern that the first bending plate 620 may interfere with an adjacent component.

The first terminal 600 according to the present embodiment may further include a first coupling hole 640.

The first coupling hole 640 may function as a component for reinforcing coupling strength between the first bending plate 620 and the first gasket 601.

The first coupling hole 640 according to the present embodiment may have a hole shape that passes through both surfaces of the first bending plate 620 in the second direction. The first gasket 601, for example, the first outer gasket 604 surrounding the first bending plate 620, may be inserted into the first coupling hole 640. Therefore, the first terminal 600 is coupled by being caught (e.g., fixed) on the first gasket 601 in a direction intersecting the first direction, and relative movement of the first terminal 600 with respect to the first gasket 601 can be prevented or substantially prevented.

The first coupling hole 640 may be disposed to face the first notch 630 in the third direction. As a non-limiting example, the first coupling hole 640 may be disposed between the pair of first notches 630. Therefore, the first coupling hole 640 may reinforce the coupling strength between the first bending plate 620 and the first gasket 601 and at the same time, guide the bending operation of the first bending plate 620 together with the first notch 630.

A plurality of first coupling holes 640 may be provided. The plurality of first coupling holes 640 may be arranged at set intervals in the third direction.

The first terminal 600 according to the present embodiment may further include a first alignment hole 650.

The first alignment hole 650 may function as a component in which a tool for fixing the location of the first terminal 600 is fastened during the insert injection of the first gasket 601 or a connection process between the first terminal 600 and an external electrical device.

The first alignment hole 650 according to the present embodiment may have a hole shape that passes through both surfaces of the first bending plate 620 in the second direction. A height of the first alignment hole 650 may be greater than the heights of the first notch 630 and the first coupling hole 640. That is, the first alignment hole 650 may be disposed at a location that is relatively closer to the end portion of the first bending plate 620 than the first notch 630 and the first coupling hole 640.

The secondary battery 1 according to the present embodiment may further include a second current collector 700 and a second terminal 800.

The second current collector 700 may be disposed between the electrode assembly 200 and the cap plate 410 and connected to the second tab member 302. The second current collector 700 may function as a component that electrically connects the second tab member 302 to the second terminal 800. The second current collector 700 may be made of an electrically conductive material such as aluminum, copper, or nickel.

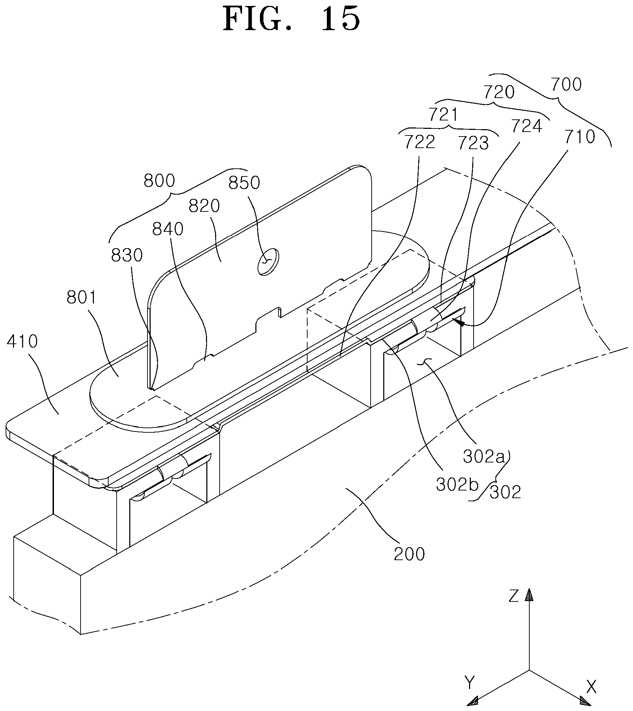

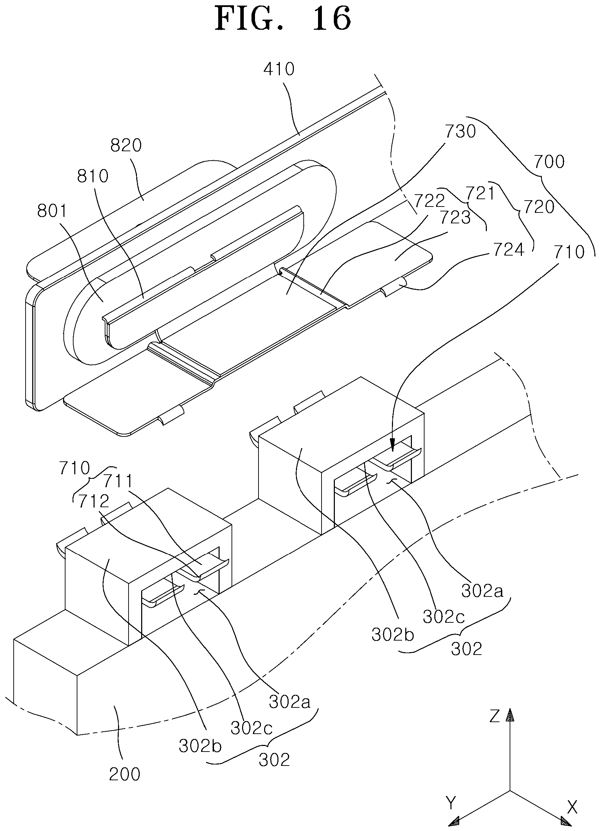

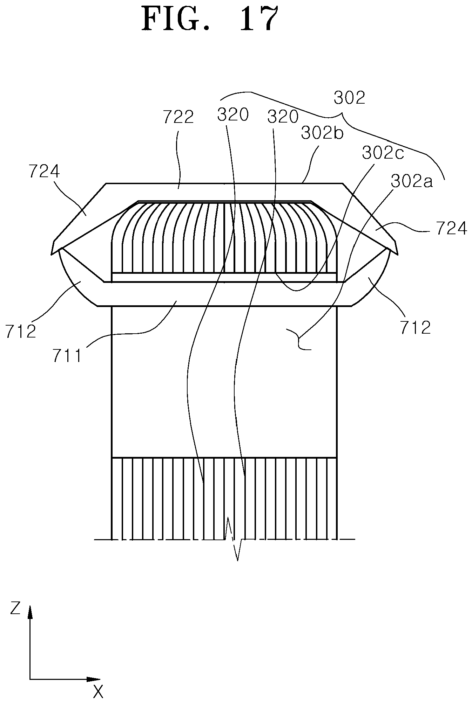

FIG. 15 is a schematic perspective view showing the installed state of the second current collector and the second terminal according to one embodiment of the present disclosure, FIG. 16 is an exploded perspective view of the second current collector and the second terminal of FIG. 15, and FIG. 17 is a cross-sectional view of the second current collector and the second terminal of FIG. 15.

Referring to FIGS. 15 to 17, the second current collector 700 according to the present embodiment may include a second inner current collector 710 and a second outer current collector 720.

The second inner current collector 710 may be inserted into the second insertion hole 302a. The second inner current collector 710 may function as a component that supports a plurality of second tab members 302 in the process of bonding the second outer current collector 720 and the second tab member 302 and aligns the locations of the plurality of second tab members 302.

A plurality of second inner current collectors 710 may be provided. At least one second inner current collector 710 may be inserted into each second insertion hole 302a. Although FIG. 15 shows an example in which two second inner current collectors 710 are inserted into each second insertion hole 302a, the number of second inner current collectors inserted into each second insertion hole 302a may be changed in design to 1, 3, etc., depending on an area, etc., of the second insertion hole 302a.

The second inner current collector 710 according to the present embodiment may include a second inner plate 711 and a second inner guide part 712.

The second inner plate 711 may be inserted into the second insertion hole 302a and may have a plate shape disposed in the second direction. A length of the second inner plate 711 parallel to the second direction may be greater than a depth of the second insertion hole 302a parallel to the second direction. Both end portions of the second inner plate 711 may protrude outward from the second insertion hole 302a in the second direction and the direction opposite to the second direction. One surface of the second inner plate 711 that is perpendicular to the first direction may be in contact with the second inner surface 302c. The second inner plate 711 may be bonded to the second tab member 302 by laser welding, etc.

The second inner guide part 712 may extend obliquely from the end portion of the second inner plate 711 in the first direction. That is, the second inner guide part 712 may have a hook shape that extends obliquely from the end portion of the second inner plate 711 toward the cap plate 410.

A pair of second inner guide parts 712 may be provided. The pair of second inner guide parts 712 may be disposed on both end portions of the second inner plate 711. A distance between the pair of second inner guide parts 712 may increase toward an end portion of the second inner guide part 712.

Each of the second inner guide parts 712 may be disposed to face both side surfaces of the second tab member 302 that are perpendicular to the second direction. Therefore, the second inner guide part 712 can prevent or substantially prevent an increase in area of the second outer surface 302b by restricting the unfolding of the plurality of second tabs 320 bent toward the central portion of the second tab member 302 by an inclined structure. That is, the two second inner guide parts 712 confine the second tab member 302 with their inclined structures. Therefore, the plurality of second tabs 320 that are bent toward the central portion of the second tab member 302 are restricted from separating from each other and thereby an increase in the area of the second outer surface 302b is restricted.

The second outer current collector 720 may be disposed outside the second tab member 302. The second outer current collectors 720 may be disposed to face the second inner current collectors 710 with the second tab member 302 interposed therebetween. The second outer current collector 720 may be connected to the second tab member 302. The second outer current collector 720 may function as a component that collects a current transmitted to the plurality of second tabs 320 through the second electrode 220 into one path.

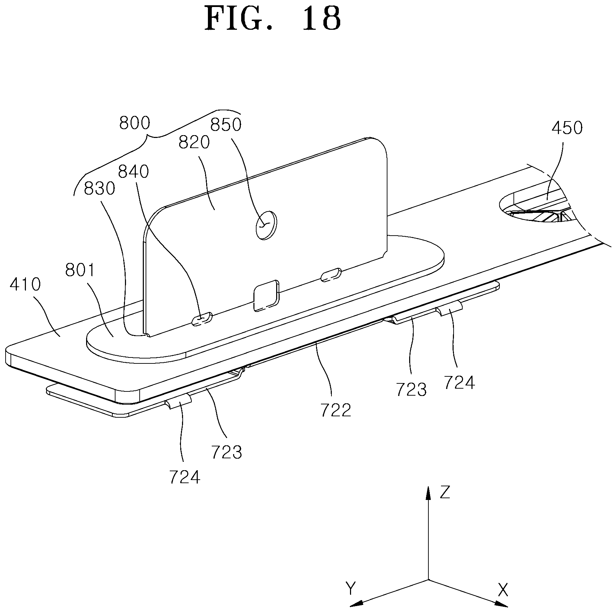

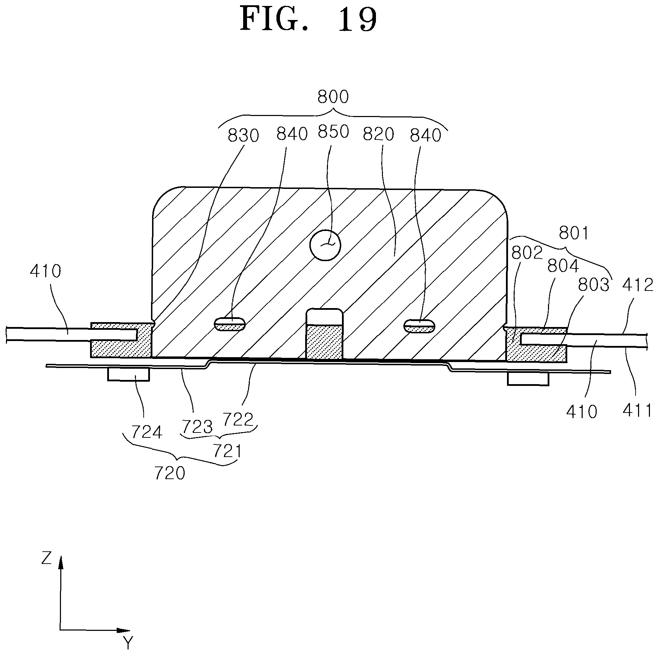

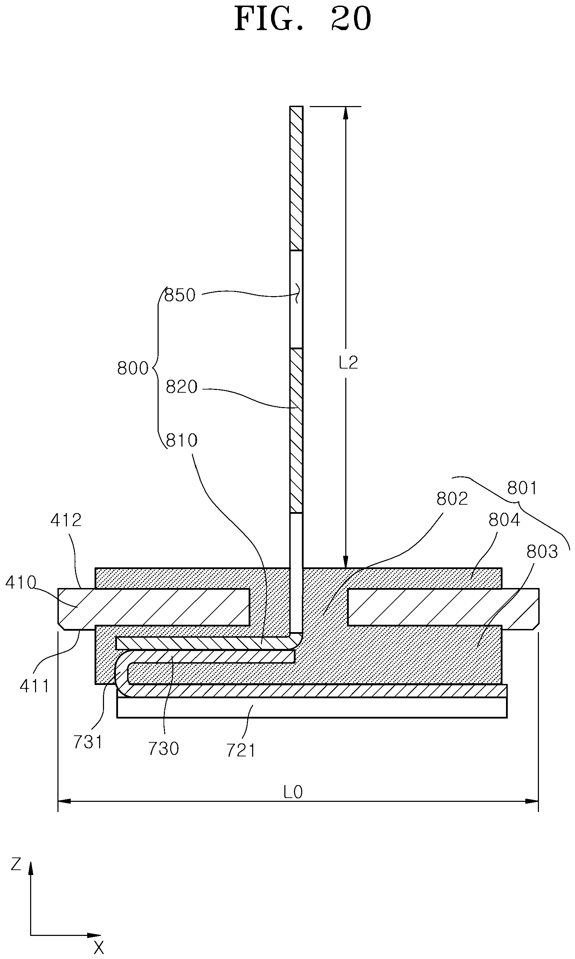

FIG. 18 is a schematic perspective view showing the configuration of the second outer current collector and the second terminal according to one embodiment of the present disclosure, FIG. 19 is a front view of the second outer current collector and the second terminal of FIG. 18, and FIG. 20 is a side view of the second outer current collector and the second terminal of FIG. 18.

Referring to FIGS. 15 to 20, the second outer current collector 720 according to the present embodiment may include a second outer plate 721 and a second outer guide part 724.

The second outer plate 721 may be disposed between the second tab member 302 and the cap plate 410. The second outer plate 721 may be in contact with the second outer surface 302b of the second tab member 302.

The second outer plate 721 according to the present embodiment may include a second center plate 722 and a second extension plate 723.

The second center plate 722 may form a central exterior of the second outer plate 721 and support the second extension plate 723.

The second center plate 722 according to the present embodiment may be disposed between the electrode assembly 200 and the cap plate 410. The second center plate 722 may be disposed to face the electrode assembly 200 in the first direction. As a non-limiting example, the second center plate 722 may be disposed to face one surface of the electrode assembly 200 located between the pair of neighboring second tab members 302.

Both end portions of the second center plate 722 may extend toward the electrode assembly 200. The two end portions of the second center plate 722 may pass through the insulating plate 470 and may be disposed on a lower side of the insulating plate 470.

The second extension plate 723 may extend from the second center plate 722 and may be in contact with the second tab member 302.

The second extension plate 723 according to the present embodiment may extend from the end portion of the second center plate 722 in a direction parallel to the third direction. The second extension plate 723 may be disposed to face the second tab member 302 in the first direction. The second extension plate 723 may be in contact with the second outer surface 302b of the second tab member 302 disposed to face the cap plate 410.

A pair of second extension plates 723 may be provided. The pair of second extension plates 723 may extend from both end portions of the second center plate 722 in the third direction and in a direction opposite to the third direction. Each of the second extension plates 723 may be in contact with the second outer surface 302b of one of the second tab members 302.

The second extension plate 723 may be bonded to the second tab member 302 by laser welding.

The second outer guide part 724 may extend obliquely from the second outer plate 721 in the direction opposite to the first direction.

The second outer guide part 724 according to the present embodiment may have a hook shape that extends obliquely from the second extension plate 723 toward the electrode assembly 200.

A plurality of second outer guide parts 724 may be provided. The second outer guide part 724 may be disposed between the pair of second inner guide parts 712 adjacent to each other in the third direction. That is, the second inner guide part 712 and the second outer guide part 724 may be alternately disposed in the third direction. Therefore, the second inner guide part 712 and the second outer guide part 724 may be configured so that the second inner plate 711 and the second outer plate 721 may be in contact (e.g., smoothly in contact) with the second inner surface 302c and the second outer surface 302b without any interference, respectively.

The second outer guide part 724 may be disposed symmetrically at both sides of the second extension plate 723 with respect to the third direction. A distance between the pair of second outer guide parts 724 disposed to face each other in the second direction may increase toward an end portion of the second outer guide part 724.

Each of the second outer guide parts 724 may be disposed to face both side surfaces of the second tab member 302 that are perpendicular to the second direction. Therefore, the second outer guide part 724 can prevent or substantially prevent an increase in area of the second outer surface 302b by restricting the unfolding of the plurality of second tabs 320 bent toward the central portion of the second tab member 302 together with the second inner guide part 712. That is, the two second outer guide parts 724, together with the two second inner guide parts 712, confine second tabs 320 with their inclined structures. Therefore, the plurality of second tabs 320 that are bent toward the central portion of the second tab member 302 are restricted from separating from each other and thereby an increase in the area of the second outer surface 302b is restricted.

The second current collector 700 according to the present embodiment may further include a second connecting member 730.

The second connecting member 730 may be disposed between the second outer plate 721 and the second terminal 800. The second connecting member 730 may support the second terminal 800 with respect to the second outer plate 721. That is, the second connecting member 730 may function as a component that provides mechanical and electrical connection between the second outer plate 721 and the second terminal 800.

The two end portions of the second connecting member 730 according to the present embodiment may be connected to the second center plate 722 and the second support plate 810 of the second terminal 800, respectively.

A second bending portion 731 that movably supports the second terminal 800 with respect to the second outer plate 721 may be formed on a portion between two ends (e.g., a central portion) of the second connecting member 730.

The second bending portion 731 according to the present embodiment may be bent clockwise or counterclockwise in the third direction and may adjust the relative location of the second terminal 800 with respect to the second outer plate 721. As a non-limiting example, as the second bending portion 731 is bent clockwise as shown in FIG. 20, the second outer plate 721 and the second terminal 800 may be aligned in the first direction. Therefore, the secondary battery 1 according to the present embodiment may align the relative location of the second terminal 800 with respect to the second outer plate 721 using only a bending operation of the second bending portion 731 without an additional bonding process of the second outer plate 721 and the second terminal 800. Referring to FIG. 20, as the second bending portion 731 is unfolded counterclockwise, the second terminal 800 may move to the outside of the second outer plate 721, and an upper surface of the second outer plate 721 may be opened (e.g., exposed). Therefore, the second bending portion 731 can prevent or substantially prevent a welding device, etc., from interfering with the second terminal 800 if (e.g., when) the second outer plate 721 and the second tab member 302 are bonded. That is, as a non-limiting example, by adjusting the second bending portion 731, either by folding it counterclockwise or unfolding it clockwise, the relative position of the second terminal 800 with respect to the second outer plate 721 can be adjusted. This allows processes on the second outer plate 721, such as bonding with the second tab member 302, to be conducted without obstruction from the second terminal 800 or damaging the second terminal 800 by the welding device.

The second terminal 800 may extend from the second current collector 700 to the outside of the cap plate 410. The second terminal 800 may function as a component that connects the secondary battery 1 to an external electrical device, for example, another secondary battery 1, a busbar, etc.

The second terminal 800 may be provided to be deformable (e.g., bendable or flexible). Therefore, the second terminal 800 may have an adjustable location or extending direction by deforming its shape and may be directly connected to a terminal of another secondary battery 1 or an external busbar. The second terminal 800 may be made of an electrically conductive material such as copper, aluminum, or nickel. The material of the second terminal 800 may be the same as the material of the second current collector 700 or alternatively, may be different from the material of the second current collector 700.

The second terminal 800 according to the present embodiment may include a second support plate 810 and a second bending plate 820.

The second support plate 810 may form a side (e.g., one side exterior) of the second terminal 800 and support the second bending plate 820. The second support plate 810 may be connected to the second current collector 700.

The second support plate 810 according to the present embodiment may be formed to have a substantially flat plate shape. The second support plate 810 may be connected to the other end portion of the second connecting member 730 extending from the second center plate 722. The second support plate 810 may be manufactured separately from the second connecting member 730 and then connected to the second connecting member 730 by welding, etc. Alternatively, the second support plate 810 may be formed integrally with the second connecting member 730. The relative location of the second support plate 810 with respect to the second center plate 722 may be changed in conjunction with the bending operation of the second bending portion 731. The second support plate 810 may be disposed to face the second center plate 722 in a parallel manner in the first direction as the second bending portion 731 is bent (e.g., completely bent) counterclockwise (see FIG. 20). That is, by bending the second bending portion 731 counterclockwise such that the two ends of the second connecting member 730 on each side of the second bending portion 731 are parallel to each other, the second support plate 810 may face and be parallel to the second center plate 722 along the first direction.

The second bending plate 820 may extend from the second support plate 810 and protrude outward from the cap plate 410.

The second bending plate 820 according to the present embodiment may be disposed to intersect the second support plate 810. As a non-limiting example, the second bending plate 820 may have a flat plate shape that extends from the second support plate 810 in the first direction in a state in which the first support plate 611 is disposed to face the second center plate 722 in a parallel manner in the first direction. An end portion of the second bending plate 820 may vertically pass through the first surface 411 and the second surface 412 of the cap plate 410 in the first direction and protrude to an external space of the cap plate 410.

The second bending plate 820 may be provided to be bent in the third direction. The second bending plate 820 may be bent clockwise or counterclockwise with respect to an arbitrary straight line parallel to the third direction by an external force applied from a user, a tool, etc. During a bending operation of the second bending plate 820, the end portion of the second bending plate 820 may protrude outward from the cap plate 410 in the second direction or the direction opposite to the second direction. Therefore, the second bending plate 820 may be in contact with and connected to an electrical device located outside the cap plate 410, for example, a terminal of another secondary battery 1 or a busbar.

The second terminal 800 according to the present embodiment may further include a second notch 830.

The second notch 830 may function as a component that guides the bending operation of the second bending plate 820.

The second notch 830 according to the present embodiment may have a groove shape that is concavely formed in a direction parallel to the third direction from an end surface of the second bending plate 820 that is perpendicular to the third direction. The second notch 830 may pass through both surfaces of the second bending plate 820 in the second direction. A length of the second bending plate 820 that is parallel to the third direction may be relatively reduced in a region in which the second notch 830 is formed. Therefore, bending stress applied to the second bending plate 820 is concentrated on the second notch 830, and the bending operation of the second bending plate 820 may be consistently performed based on the second notch 830. A cross-sectional shape of the second notch 830 may be changed in design to have any of various shapes such as polygon or oval other than the semicircular shape shown in FIG. 19.

A pair of second notches 830 may be provided. The pair of second notches 830 may be disposed symmetrically at both sides of the second bending plate 820. As a non-limiting example, the pair of second notches 830 may be formed concavely in the direction opposite to the third direction from one end portion of the second bending plate 820 disposed to face the third direction, and the remaining second notch 830 may be formed concavely in the third direction from the other end portion of the second bending plate 820 disposed to face the direction opposite to the third direction. The pair of second notches 830 may be disposed to face each other in the third direction. That is, the center lines of the pair of second notches 830 may be disposed to be located on one straight line parallel to the third direction.

The secondary battery 1 according to the present embodiment may further include a second gasket 801.

The second gasket 801 may electrically insulate the cap plate 410 and the second terminal 800. The second gasket 801 may block moisture or foreign substances from being introduced between the cap plate 410 and the second terminal 800. The second gasket 801 may be made of an insulating material such as polyethylene (PE), polypropylene (PP), polyethylene terephthalate (PET), or rubber. The second gasket 801 may be installed between the cap plate 410 and the second terminal 800 by insert injection molding.

The second gasket 801 according to the present embodiment may include a second gasket body 802, a second inner gasket 803, and a second outer gasket 804.

The first gasket body 802 may form a central exterior of the second gasket 801.

The first gasket body 802 according to the present embodiment may vertically pass through the first surface 411 and the second surface 412 of the cap plate 410. One end portion of the first gasket body 802 may protrude at a set or predetermined distance from the first surface 411 to the internal space of the case 100. The other end portion of the first gasket body 802 may protrude at a set or predetermined distance from the second surface 412 to the outside of the cap plate 410. The first gasket body 802 may be disposed to pass through the cap plate 410 and surround a lower end portion region of the second bending plate 820 located inside the cap plate 410.

The second inner gasket 803 may be disposed to extend from the first gasket body 802 and surround the second support plate 810.

The second inner gasket 803 according to the present embodiment may be connected to the one end portion of the first gasket body 802 protruding to the inner space of the case 100. The second inner gasket 803 may be disposed to entirely surround the second support plate 810 facing the first surface 411 of the cap plate 410. A cross-sectional area of the second inner gasket 803 that is perpendicular to the first direction may be larger than a cross-sectional area of the first gasket body 802 that is perpendicular to the first direction. The second inner gasket 803 may be in contact with the first surface 411 of the cap plate 410. Therefore, the second inner gasket 803 may be in contact with the first surface 411 to prevent or substantially prevent the second gasket 801 from being separated from the cap plate 410 in the first direction.

The second outer gasket 804 may be disposed to extend from the first gasket body 802 and surround the second bending plate 820.

The second outer gasket 804 according to the present embodiment may be connected to the other end portion of the first gasket body 802 protruding outward from the cap plate 410. The second outer gasket 804 may be disposed to surround the second bending plate 820 protruding from the second surface 412 of the cap plate 410. A height of the second outer gasket 804 may be equal to or lower than a height of the center line of the second notch 830. Therefore, the second outer gasket 804 may not interfere with the bending operation of the second bending plate 820 by exposing all or part of the second notch 830 to the outside.

A cross-sectional area of the second outer gasket 804 that is perpendicular to the first direction may be larger than the cross-sectional area of the first gasket body 802 that is perpendicular to the first direction. The second outer gasket 804 may be in contact with the second surface 412 of the cap plate 410. Therefore, the second outer gasket 804 may be in contact with the second surface 412 to prevent or substantially prevent the second gasket 801 from being separated from the cap plate 410 in the direction opposite to the first direction.

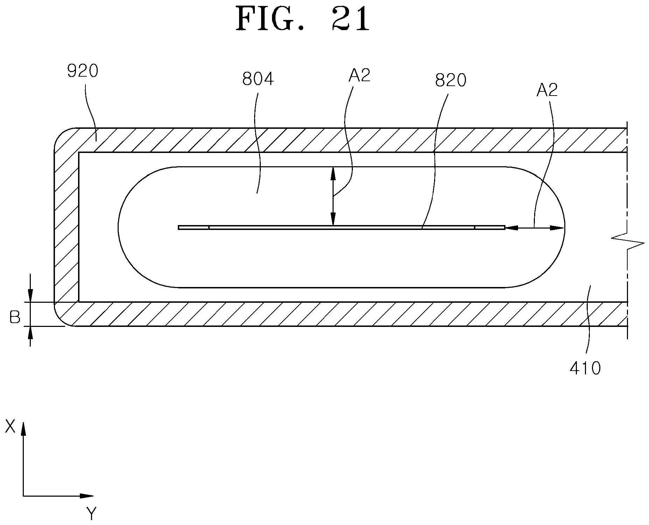

FIG. 21 is a schematic plan view showing the arrangement relationship between the first bending plate and the first gasket according to one embodiment of the present disclosure.

Referring to FIG. 21, a distance A2 from the second bending plate 820 to an outer perimetric surface of the second outer gasket 804 may be 3 mm or more. If (e.g., when) the distance A2 from the second bending plate 820 to the outer perimetric surface of the second outer gasket 804 is smaller than 3 mm, electrical insulation between the cap plate 410 and the second terminal 800 cannot be sufficiently secured. Various designs are possible within a range in which the distance A2 from the second bending plate 820 to the outer perimetric surface of the second outer gasket 804 is 3 mm or more and is smaller than a distance from the second bending plate 820 to an edge of the cap plate 410.

A ratio (L2/L0) of a protrusion length L2 of the second bending plate 820 to the width L0 of the cap plate 410 may be 0.5 or more and 2.0 or less. Here, if (e.g., when) the second bending plate 820 is disposed parallel to the first direction, the protrusion length L2 of the second bending plate 820 may be a length from an upper surface of the second outer gasket 804 or the center line of the second notch 830 to the end portion of the second bending plate 820. If (e.g., when) the ratio (L2/L0) of the protrusion length L2 of the second bending plate 820 to the width L0 of the cap plate 410 is smaller than 0.5, the length of the second bending plate 820 is excessively short, and thus smooth connection with an adjacent electrical device cannot be achieved. If (e.g., when) the ratio (L2/L0) of the protrusion length L2 of the second bending plate 820 to the width L0 of the cap plate 410 is greater than 2.0, the length of the second bending plate 820 is excessively long, and thus there is a concern that the second bending plate 820 may interfere with an adjacent component.

The protrusion length L2 of the second bending plate 820 may be the same as or may differ from the protrusion length L1 of the first bending plate 620.

The second terminal 800 according to the present embodiment may further include a second coupling hole 840.

The second coupling hole 840 may function as a component for reinforcing coupling strength between the second bending plate 820 and the second gasket 801.

The second coupling hole 840 according to the present embodiment may have a hole shape that passes through both surfaces of the second bending plate 820 in the second direction. The second gasket 801, for example, the second outer gasket 804 surrounding the second bending plate 820, may be inserted into the second coupling hole 840. Therefore, the second terminal 800 is coupled by being caught (e.g., fixed) on the second gasket 801 in a direction intersecting the first direction, and relative movement of the second terminal 800 with respect to the second gasket 801 can be prevented or substantially prevented.

The second coupling hole 840 may be disposed to face the second notch 830 in the third direction. As a non-limiting example, the second coupling hole 840 may be disposed between the pair of second notches 830. Therefore, the second coupling hole 840 may reinforce the coupling strength between the second bending plate 820 and the second gasket 801 and at the same time, guide the bending operation of the second bending plate 820 together with the second notch 830.

A plurality of second coupling holes 840 may be provided. The plurality of second coupling holes 840 may be arranged at set intervals in the third direction.

The second terminal 800 according to the present embodiment may further include a second alignment hole 850.

The second alignment hole 850 may function as a component in which a tool for fixing the location of the second terminal 800 is fastened during the insert injection of the second gasket 801 or a connection process between the second terminal 800 and an external electrical device.

The second alignment hole 850 according to the present embodiment may have a hole shape that passes through both surfaces of the second bending plate 820 in the second direction. A height of the second alignment hole 850 may be greater than the heights of the second notch 830 and the second coupling hole 840. That is, the second alignment hole 850 may be disposed at a location that is relatively closer to the end portion of the second bending plate 820 than the second notch 830 and the second coupling hole 840.

The secondary battery 1 according to the present embodiment may further include an insulating member 900.

The insulating member 900 may be disposed to surround the case 100 and the cap plate 410. The insulating member 900 may be made of an insulating material such as polyethylene (PE), polypropylene (PP), polyethylene terephthalate (PET), or rubber. Therefore, the insulating member 900 may function as a component that secures external insulation of the secondary battery 1.

The insulating member 900 according to the present embodiment may include a first insulating member 910 and a second insulating member 920.

The first insulating member 910 may be disposed to surround the case 100. The first insulating member 910 according to the present embodiment may be disposed to entirely cover the outer surfaces of the bottom portion 110, the front portion 120, the rear portion 130, the first side portion 140, and the second side portion 150 of the case 100. The first insulating member 910 may be fixed to the outer surface of the case 100 by any type of coupling method such as a bonding or pressing method.

The second insulating member 920 may be disposed to extend from the first insulating member 910 and surround the cap plate 410. The second insulating member 920 according to the present embodiment may extend from an upper end portion of the first insulating member 910 that is parallel to the cap plate 410. The second insulating member 920 may be disposed to cover an edge region of the second surface 412 of the cap plate 410. The second insulating member 920 may be fixed to the second surface 412 of the cap plate 410 by any type of coupling method such as a bonding or pressing method. Therefore, the first insulating member 910 and the second insulating member 920 may be disposed to entirely surround the bonded portion of the case 100 and the cap plate 410, thereby further reinforcing coupling strength between the case 100 and the cap plate 410.

A width B of the second insulating member 920 covering the second surface 412 of the cap plate 410 may be 1 mm or more. Here, the width B of the second insulating member 920 may be a gap between an outer perimetric surface and inner perimetric surface of the second insulating member 920 that is parallel to the third direction or the second direction. Various designs are possible within a range in which the width B of the second insulating member 920 is 1 mm or more and the second insulating member 920 is not in direct contact with the first gasket 601 and the second gasket 801.

Hereinafter, a secondary battery manufacturing method according to one embodiment of the present disclosure will be described.

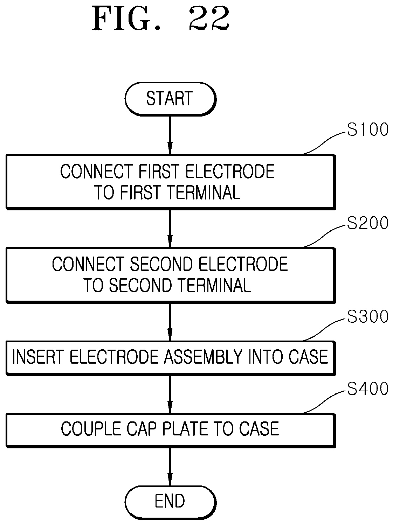

FIG. 22 is a flowchart showing a secondary battery manufacturing method according to one embodiment of the present disclosure.

Referring to FIG. 22, first, the first electrode 210 of the electrode assembly 200 and the first terminal 600 are connected (S100).

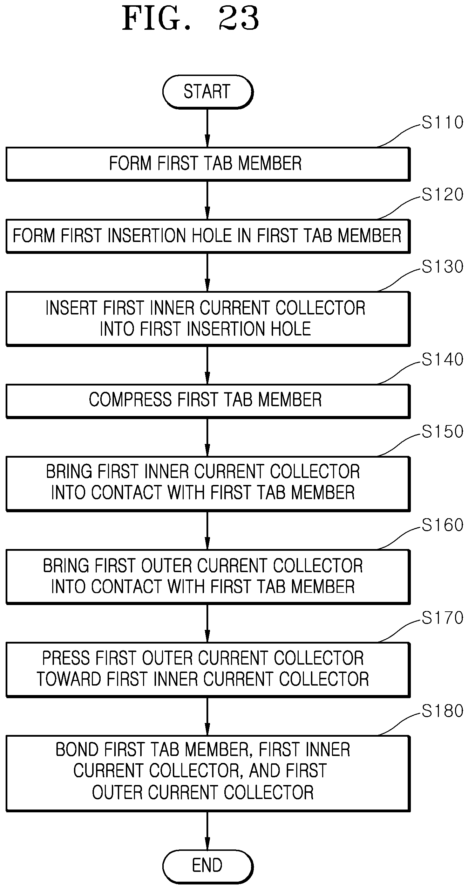

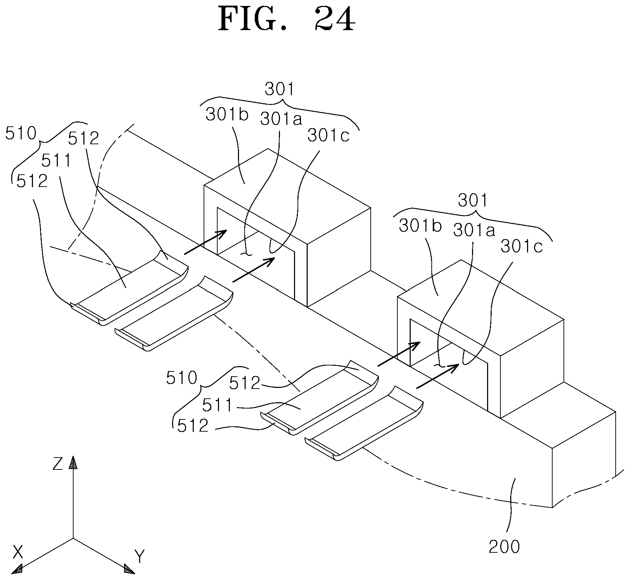

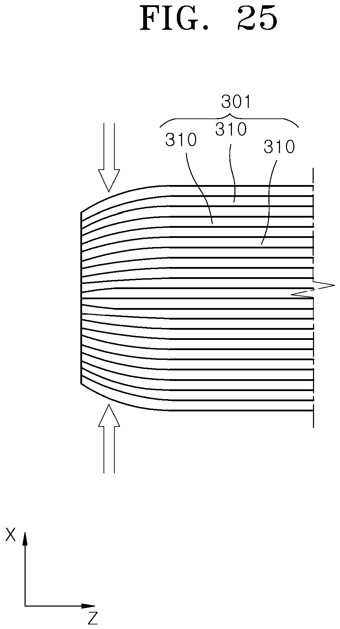

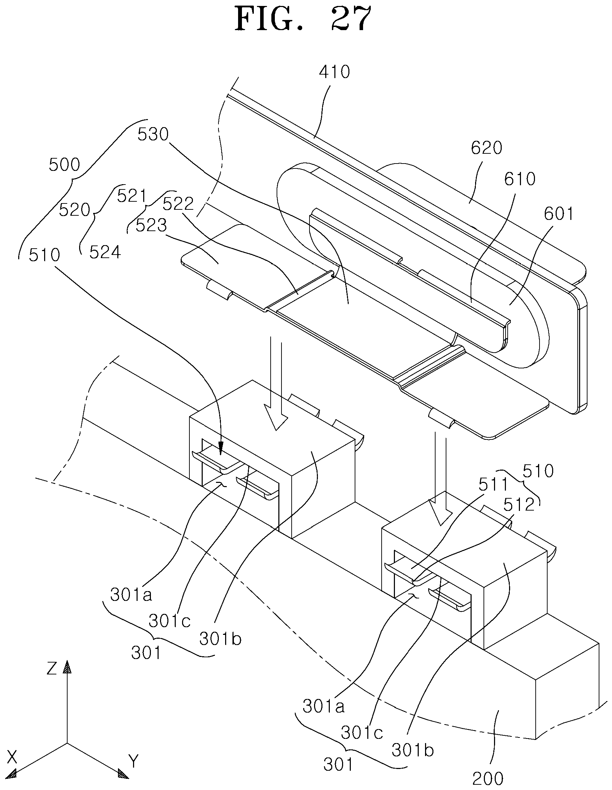

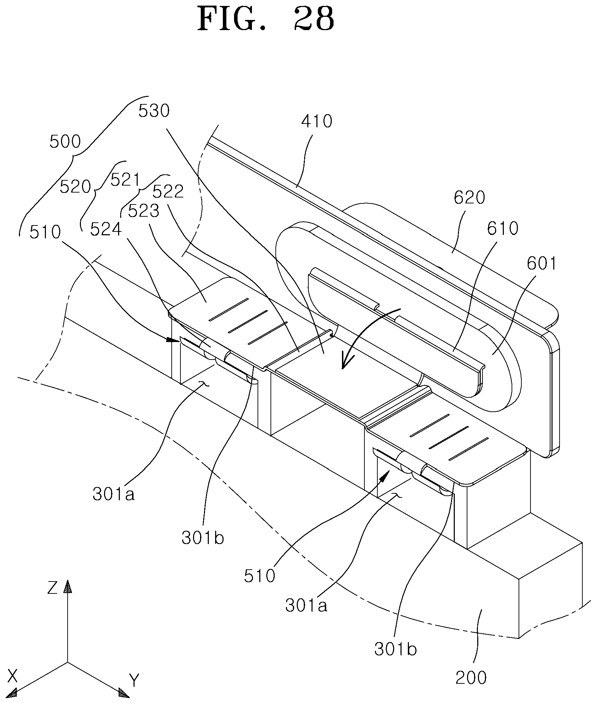

FIG. 23 is a flowchart showing an operation of connecting a first electrode to a first terminal according to one embodiment of the present disclosure, and FIGS. 24 to 28 are schematic views showing a process of connecting the first electrode to the first terminal according to one embodiment of the present disclosure.

Specifically describing operation S100 with reference to FIGS. 23 to 28, first, the first tab member 301 is formed on the electrode assembly 200 (S110).

As a non-limiting example, operation (or act) S110 may be performed by cutting or removing a portion of the first uncoated portion 212 of the first electrode 210 using a notching jig, etc.

The first tab 310 may be formed in the remaining region of the first uncoated portion 212 in which the above described portion is cut off by the notching jig, etc.

Alternatively, operation S110 may be performed by manufacturing the first tab 310 separately from the first electrode 210 and then connecting the first tab 310 to the first uncoated portion 212 by welding, etc.

Then, as the plurality of first electrodes 210, second electrodes 220, and separators 230 are stacked in the second direction, the first tab member 301 composed of the first tabs 310 may be formed to extend from one surface of the electrode assembly 200 in the first direction.

The first insertion hole 301a is formed in the first tab member 301 (S120).

Operation (or act) S120 may be performed simultaneously or concurrently with operation S110. As a non-limiting example, if (e.g., when) the notching jig forms the first tab 310 in operation S110, the notching jig may cut or punch the central portion of the first tab 310.

As such, as the plurality of first electrodes 210, second electrodes 220, and separators 230 are stacked in the second direction, the first insertion hole 301a may be formed in the central portion of the first tab member 301.

However, operation S120 is not limited thereto, and after the first tab member 301 is formed in operation S110, the first insertion hole 301a may be formed by cutting or punching the central portion of the first tab member 301 using a separate device.

After operation S120, the first inner current collector 510 is inserted into the first insertion hole 301a (S130).

Operation (or act) S130 may be performed by seating (e.g., placing) the electrode assembly 200 and the first tab member 301 on a fixed jig and then moving the first inner current collector 510 located outside the first insertion hole 301a in the second direction or the direction opposite to the second direction using a moving jig, etc.

In operation S130, the first inner current collector 510 may be inserted into the first insertion hole 301a in a state in which one surface of the first inner plate 511 is spaced at a set or predetermined distance from the first inner surface 301c in the first direction. Therefore, it is possible to prevent or substantially prevent the first inner guide part 512 from interfering with the first tab member 301 in the process of inserting the first inner current collector 510 into the first insertion hole 301a.

Operation S130 may be performed until the pair of first inner guide parts 512 protrude to both sides of the first tab member 301 through the first insertion hole 301a.

In operation S130, the first inner current collectors 510 may be simultaneously or concurrently moved in the second direction or the direction opposite to the second direction by the moving jig and inserted into the first insertion hole 301a.

The first tab member 301 is compressed so that the area of the first outer surface 301b of the first tab member 301 is reduced (S140).

Operation (or act) S140 may be performed simultaneously or concurrently with operation S130. As a non-limiting example, in operation S130, both surfaces of the first tab member 301 that is perpendicular to the second direction may be in contact with the fixed jig, on which the first tab member 301 is seated, and the moving jig for inserting the first inner current collector 510 into the first insertion hole 301a.

As the first inner current collector 510 is inserted into the first insertion hole 301a, a distance between the moving jig and the fixed jig is reduced, and both surfaces of the first tab member 301 that is perpendicular to the second direction may be compressed in a direction parallel to the second direction by a compressive force applied between the moving jig and the fixed jig.

In operation S140, the end portions of the plurality of first tabs 310 may be bent in a direction that converges toward the central portion of the first tab member 301. Therefore, the area of the first outer surface 301b formed by the end portions of the plurality of first tabs 310 may be reduced.

However, operation S140 is not limited thereto and may be performed by a separate pressing means that presses both surfaces of the first tab member 301 that is perpendicular to the second direction in opposite directions after operation S130.

After operation S140, the first inner current collector 510 is in contact with the first tab member 301 (S150).

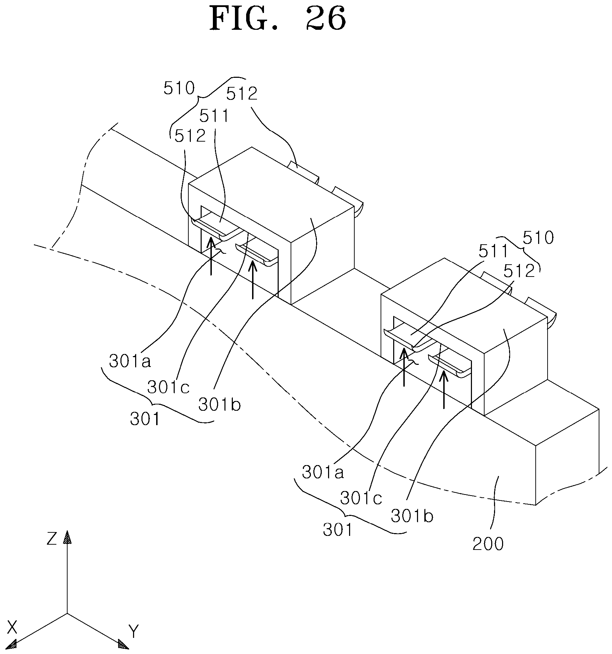

Operation (or act) S150 may be performed by inserting a pressing jig into the first insertion hole 301a. As a non-limiting example, the pressing jig may be inserted between the other surface (lower surface based on FIG. 26) of the first inner plate 511 that does not face the first inner surface 301c and the inner surface of the first tab member 301 that faces the other surface of the first inner plate 511 in the first direction.

As the pressing jig is inserted into the first insertion hole 301a, the pressing jig presses the first inner plate 511 toward the first inner surface 301c, and the one surface of the first inner plate 511 may be in contact with the first inner surface 301c.

However, operation S150 is not limited thereto and may be performed by a separate transport means that moves the first inner plate 511 toward the first inner surface 301c.

After operation S150, the first outer current collector 520 is in contact with the first tab member 301 (S160), and the first outer current collector 520 is pressed toward the first inner current collector 510 (S170).

Operations (or acts) S160 and S170 may be performed in a state in which the first outer current collector 520 is connected to the first terminal 600 and the cap plate 410 by the first connecting member 530, or alternatively, may be performed in a state in which the first outer current collector 520 is separated from the first terminal 600 and the cap plate 410.

In operations S160 and S170, the first outer current collector 520 may be moved in the direction opposite to the first direction by a transport means such as a gripper or an adsorption device in a state of being disposed to face the first outer surface 301b in the first direction.

As the first outer current collector 520 moves a set distance or more in the direction opposite to the first direction, the first extension plate 523 is in contact with the first outer surface 301b and presses the first outer surface 301b in the direction opposite to the first direction.

The first tab 310 located at the end portion of the first tab member 301 is deformed by being compressed by the pressing force applied from the first extension plate 523.

As the end portions of the plurality of first tabs 310 are bent in the direction that converges toward the central portion of the first tab member 301 in advance (e.g., through an earlier act), the plurality of first tabs 310 may be deformed by being compressed in a direction that reduces the area of the first outer surface 301b, and the first outer surface 301b may be in close contact (e.g., strongly in close contact) with the first extension plate 523.

After operation S170, the first tab member 301, the first inner current collector 510, and the first outer current collector 520 are bonded (S180).

Operation (or act) S180 may be performed by a laser welder that radiates a laser beam.

In operation S180, the laser welder may radiate a laser beam toward an outer surface of the first extension plate 523 disposed to face the first direction. In operation S180, the laser welder may linearly radiate the laser beam in the arranged direction of the first tab 310, that is, the second direction.

Heat energy generated by the laser beam radiated from the laser welder may be sequentially transmitted to the first extension plate 523, the first tab member 301, and the first inner plate 511, and the first extension plate 523, the first tab member 301, and the first inner plate 511 may be melted and mixed by the heat energy.

As a molten material of the first extension plate 523, the first tab member 301, and the first inner plate 511 is cured, the first extension plate 523, the first tab member 301, and the first inner plate 511 may be bonded integrally.

Then, the second electrode 220 of the electrode assembly 200 and the second terminal 800 are connected (S200). Although FIG. 22 shows an example in which operation (or act) S200 is performed after operation S100, the present disclosure is not limited thereto, and operation S200 may be performed before operation S100 or simultaneously or concurrently with operation S100.

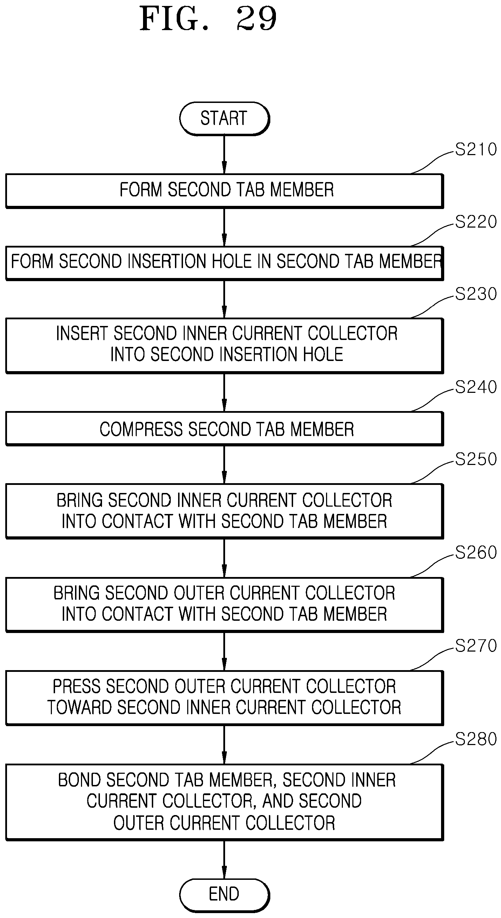

FIG. 29 is a schematic flowchart showing an operation of connecting a second electrode to a second terminal according to one embodiment of the present disclosure.

Specifically describing operation (or act) S200 with reference to FIG. 29, first, the second tab member 302 is formed on the electrode assembly 200 (S210).

As a non-limiting example, operation (or act) S210 may be performed by cutting or removing a portion of the second uncoated portion 222 of the second electrode 220 using a notching jig, etc.

The second tab 320 may be formed in the remaining region of the second uncoated portion 222 in which the above portion is cut off by the notching jig, etc.

Alternatively, operation S210 may be performed by manufacturing the second tab 320 separately from the second electrode 220 and then connecting the second tab 320 to the second uncoated portion 222 by welding, etc.,

Then, as the plurality of first electrodes 210, second electrodes 220, and separators 230 are stacked in the second direction, the second tab member 302 composed of the second tabs 320 may be formed to extend from one surface of the electrode assembly 200 in the first direction.

The second insertion hole 302a is formed in the second tab member 302 (S220).

Operation (or act) S220 may be performed simultaneously or concurrently with operation S210. As a non-limiting example, if (e.g., when) the notching jig forms the second tab 320 in operation S210, the notching jig may cut or punch the central portion of the second tab 320.

As such, as the plurality of first electrodes 210, second electrodes 220, and separators 230 are stacked in the second direction, the second insertion hole 302a may be formed in the central portion of the second tab member 302.

However, operation S220 is not limited thereto, and after the second tab member 302 is formed in operation S210, the second insertion hole 302a may be formed by cutting or punching the central portion of the second tab member 302 using a separate device.

After operation S220, the second inner current collector 710 is inserted into the second insertion hole 302a (S230).

Operation (or act) S230 may be performed by seating (e.g., placing) the electrode assembly 200 and the second tab member 302 on a fixed jig and then moving the second inner current collector 710 located outside the second insertion hole 302a in the second direction or the direction opposite to the second direction using a moving jig, etc.

In operation S230, the second inner current collector 710 may be inserted into the second insertion hole 302a in a state in which one surface of the second inner plate 711 is spaced at a set or predetermined distance from the second inner surface 302c in the first direction. Therefore, it is possible to prevent or substantially prevent the second inner guide part 712 from interfering with the second tab member 302 in the process of inserting the second inner current collector 710 into the second insertion hole 302a.

Operation S230 may be performed until the pair of second inner guide parts 712 protrude to both sides of the second tab member 302 through the second insertion hole 302a.

In operation S230, the second inner current collectors 710 may be simultaneously or concurrently moved in the second direction or the direction opposite to the second direction by the moving jig and inserted into the second insertion hole 302a.

The second tab member 302 is compressed so that the area of the second outer surface 302b of the second tab member 302 is reduced (S240).

Operation (or act) S240 may be performed simultaneously or concurrently with operation S230. As a non-limiting example, in operation S230, both surfaces of the second tab member 302 that is perpendicular to the second direction may be in contact with the fixed jig, on which the second tab member 302 is seated, and the moving jig for inserting the second inner current collector 710 into the second insertion hole 302a.

As the second inner current collector 710 is inserted into the second insertion hole 302a, a distance between the moving jig and the fixed jig is reduced, and both surfaces of the second tab member 302 that is perpendicular to the second direction may be compressed in a direction parallel to the second direction by a compressive force applied between the moving jig and the fixed jig.

In operation S240, the end portions of the plurality of second tabs 320 may be bent in a direction that converges toward the central portion of the second tab member 302. Therefore, the area of the second outer surface 302b formed by the end portions of the plurality of second tabs 320 may be reduced.

However, operation S240 is not limited thereto and may be performed by a separate pressing means that presses both surfaces of the second tab member 302 that is perpendicular to the second direction in opposite directions after operation S230.

After operation S240, the second inner current collector 710 is in contact with the second tab member 302 (S250).

Operation (or act) S250 may be performed by inserting a pressing jig into the second insertion hole 302a. As a non-limiting example, the pressing jig may be inserted between the other surface of the second inner plate 711 that does not face the second inner surface 302c and the inner surface of the second tab member 302 that faces the other surface of the second inner plate 711 in the first direction.

As the pressing jig is inserted into the second insertion hole 302a, the pressing jig presses the second inner plate 711 toward the second inner surface 302c, and the one surface of the second inner plate 711 may be in contact with the second inner surface 302c.

However, operation S250 is not limited thereto and may be performed by a separate transport means that moves the second inner plate 711 toward the second inner surface 302c.

After operation S250, the second outer current collector 720 is in contact with the second tab member 302 (S260), and the second outer current collector 720 is pressed toward the second inner current collector 710 (S270).

Operations (or acts) S260 and S270 may be performed in a state in which the second outer current collector 720 is connected to the second terminal 800 and the cap plate 410 by the second connecting member 730, or alternatively, may be performed in a state in which the second outer current collector 720 is separated from the second terminal 800 and the cap plate 410.

In operations S260 and S270, the second outer current collector 720 may be moved in the direction opposite to the first direction by a transport means such as a gripper or an adsorption device in a state of being disposed to face the second outer surface 302b in the first direction.

As the second outer current collector 720 moves a set distance or more in the direction opposite to the first direction, the second extension plate 723 is in contact with the second outer surface 302b and presses the second outer surface 302b in the direction opposite to the first direction.

The second tab 320 located at the end portion of the second tab member 302 is deformed by being compressed by the pressing force applied from the second extension plate 723.

As the end portions of the plurality of second tabs 320 are bent in the direction that converges toward the central portion of the second tab member 302 in advance (e.g., through an earlier act), the plurality of second tabs 320 may be deformed by being compressed in a direction that reduces the area of the second outer surface 302b, and the second outer surface 302b may be in close contact (e.g., strongly in close contact) with the second extension plate 723.

After operation S270, the second tab member 302, the second inner current collector 710, and the second outer current collector 720 are bonded (S280).

Operation S280 may be performed by a laser welder that radiates a laser beam.

In operation (or act) S280, the laser welder may radiate a laser beam toward an outer surface of the second extension plate 723 disposed to face the first direction. In operation S280, the laser welder may linearly radiate the laser beam in the arranged direction of the second tab 320, that is, the second direction.

Heat energy generated by the laser beam radiated from the laser welder may be sequentially transmitted to the second extension plate 723, the second tab member 302, and the second inner plate 711, and the second extension plate 723, the second tab member 302, and the second inner plate 711 may be melted and mixed by the heat energy.

Then, as a molten material of the second extension plate 723, the second tab member 302, and the second inner plate 711 is cured, the second extension plate 723, the second tab member 302, and the second inner plate 711 may be bonded integrally.

After operations S100 and S200, the electrode assembly 200 is inserted into the case 100 (S300).

In operation (or act) S300, the electrode assembly 200 may be inserted into the case 100 in the direction opposite to the first direction through the opening 160.

After operation S300, the cap plate 410 is coupled to the case 100 (S400).

In operation (or act) S400, the first bending portion 531 and the second bending portion 731 may be bent in a direction in which a curvature is reduced by an external force applied from a user, a tool, etc.

The cap plate 410 is moved in a direction in which the first surface 411 is disposed to face the opening 160 by the bending operations of the first bending portion 531 and the second bending portion 731, and the first surface 411 is seated (e.g., placed) on the upper end portion of the case 100.

Then, the first surface 411 of the cap plate 410 may be coupled to the upper end portion of the case 100 by laser welding, etc. However, operation S400 is not limited thereto, and the case 100 and the cap assembly 400 may be coupled by any type of coupling method such as a fitting, bolting, or adhesion method.

The secondary battery manufacturing method according to the present embodiment may further include surrounding the insulating member 900 around the outsides of the case 100 and the cap plate 410 after operation S400.

Hereinafter, a secondary battery according to another embodiment of the present disclosure will be described.

The secondary battery 1 according to the present embodiment may be substantially the same as described in association with FIGS. 1 to 29, except that detailed configurations of the first outer current collector 520 and the second outer current collector 720 may be different from the secondary battery 1 described based on FIGS. 1 to 29.

Therefore, in describing the secondary battery 1 according to the present embodiment, only the detailed configurations of the first outer current collector 520 and the second outer current collector 720, which are not described in the secondary battery 1 according to one embodiment of the present disclosure, will be described.

The description of the secondary battery 1 according to one embodiment of the present disclosure may be directly applied to the remaining configuration of the secondary battery 1 according to the present embodiment.

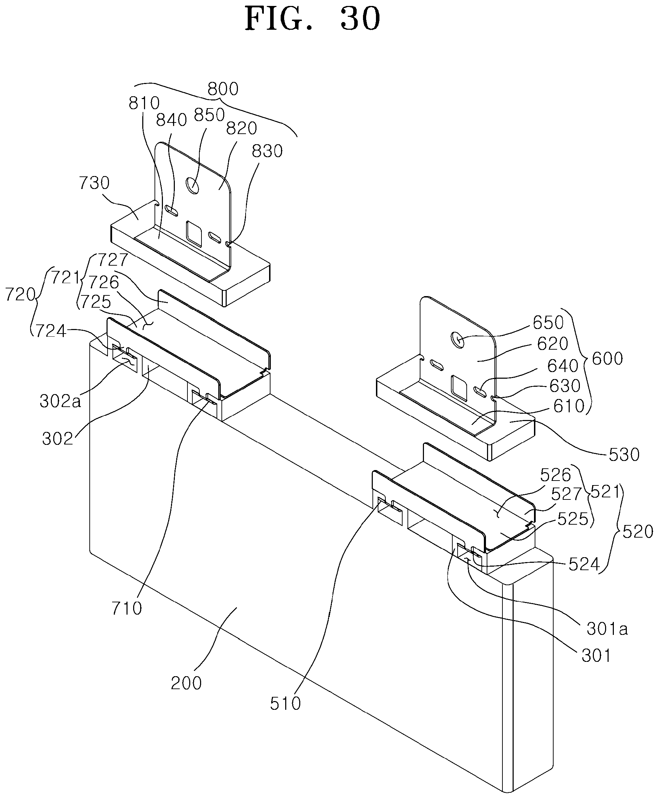

FIG. 30 is a schematic exploded perspective view showing a configuration of a secondary battery according to another embodiment of the present disclosure.

Referring to FIG. 30, the first center plate 525 according to the present embodiment may have a flat plate shape that is disposed to face the first outer surface 301b in the first direction. An area of the first center plate 525 that is perpendicular to the first direction may be larger than the sum of areas of the plurality of first outer surfaces 301b. Therefore, the first center plate 525 may be in contact with the plurality of first outer surfaces 301b at the same time.

The first extension plate 527 according to the present embodiment may extend from the first center plate 525 in the first direction. The first extension plate 527 may be located at the edge side of the first center plate 525. A pair of first extension plates 527 may be provided. The pair of first extension plates 527 may extend from different edges of the first center plate 525 and may be disposed to face each other in the second direction.

The first outer plate 521 according to the present embodiment may further include a first accommodating portion 526.

The first accommodating portion 526 according to the present embodiment may be, As a non-limiting example, an internal space of the first outer plate 521 that is disposed to face the first center plate 525 in the first direction and surrounded by the first extension plate 527.

The first connecting member 530 according to the present embodiment may have a box shape that is inserted into the first accommodating portion 526. A perimetric surface (e.g., side surfaces) of the first connecting member 530 may be in contact with an inner surface of the first extension plate 527. The first connecting member 530 may be bonded to the first extension plate 527 by laser welding, etc.

The first support plate 610 according to the present embodiment may be seated (e.g., placed) on the first connecting member 530. The first support plate 610 may be bonded to the first connecting member 530 by laser welding, etc.

The second center plate 725 according to the present embodiment may have a flat plate shape that is disposed to face the second outer surface 302b in the first direction. An area of the second center plate 725 that is perpendicular to the first direction may be larger than the sum of areas of the plurality of second outer surfaces 302b. Therefore, the second center plate 725 may be in contact with the plurality of second outer surfaces 302b at the same time.

The second extension plate 727 according to the present embodiment may extend from the second center plate 725 in the first direction. The second extension plate 727 may be located at the edge side of the second center plate 725. A pair of second extension plates 727 may be provided. The pair of second extension plates 727 may extend from different edges of the second center plate 725 and may be disposed to face each other in the second direction.

The second outer plate 721 according to the present embodiment may further include a second accommodating portion 726.

The second accommodating portion 726 according to the present embodiment may be, as a non-limiting example, an internal space of the second outer plate 721 that is disposed to face the second center plate 725 in the first direction and surrounded by the second extension plate 727.

The second connecting member 730 according to the present embodiment may have a box shape that is inserted into the second accommodating portion 726. A perimetric surface (e.g., side surfaces) of the second connecting member 730 may be in contact with an inner surface of the second extension plate 727. The second connecting member 730 may be bonded to the second extension plate 727 by laser welding, etc.

The second support plate 810 according to the present embodiment may be seated (e.g., placed) on the second connecting member 730. The second support plate 810 may be bonded to the second connecting member 730 by laser welding, etc.

Hereinafter, a secondary battery manufacturing method according to another embodiment of the present disclosure will be described.

The secondary battery manufacturing method according to the present embodiment may be substantially the same as described in association with FIGS. 1 to 29, except that detailed processes of operations (e.g., acts) S160 to S180 and S260 to S280 may be different from the secondary battery manufacturing method according to one embodiment of the present disclosure.

Therefore, in describing the secondary battery manufacturing method according to the present embodiment, only the detailed processes of operations S160 to S180 and S260 to S280, which differ from the secondary battery manufacturing method according to one embodiment of the present disclosure, will be described.

Operations S110 to S150 according to the present embodiment may be performed in a state in which the first connecting member 530 is separated from the first outer plate 521.

In operations S160 and S170 according to the present embodiment, the first outer current collector 520 may be moved in the direction opposite to the first direction by a transport means such as a gripper or an adsorption device in a state of being disposed to face the first outer surface 301b in the first direction.

As the first outer current collector 520 moves a set distance or more in the direction opposite to the first direction, the first center plate 525 is in contact with the first outer surface 301b and presses the first outer surface 301b in the direction opposite to the first direction.

The first tab 310 located at the end portion of the first tab member 301 is deformed by being compressed by the pressing force applied from the first center plate 525.

After operation S170, the first tab member 301, the first inner current collector 510, and the first outer current collector 520 are bonded (S180).

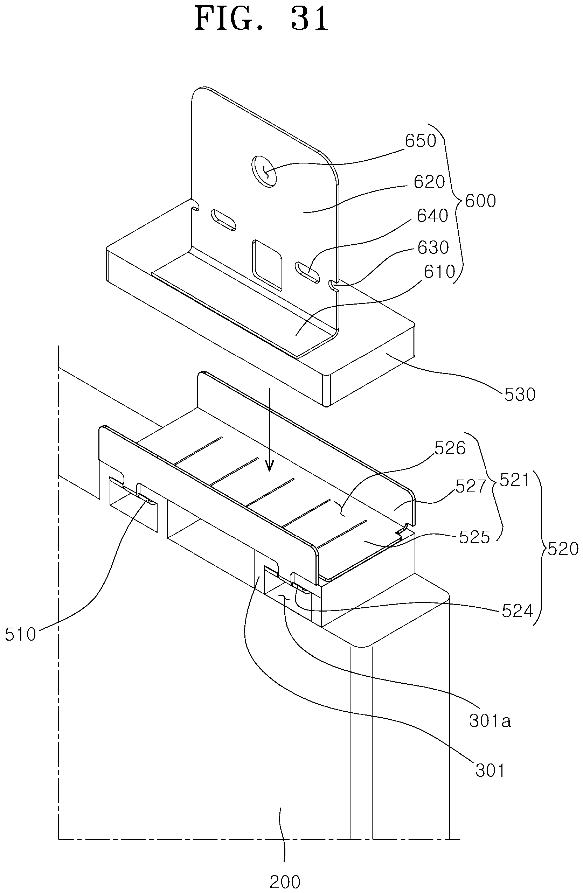

FIG. 31 is a schematic view showing a state in which a first tab member, a first inner current collector, and a first outer current collector according to another embodiment of the present disclosure are bonded.

Referring to FIG. 31, in operation (e.g., act) S180, the laser welder may radiate a laser beam toward the outer surface of the first center plate 525 disposed to face the first direction.

Heat energy generated by the laser beam radiated from the laser welder may be sequentially transmitted to the first center plate 525, the first tab member 301, and the first inner plate 511, and the first center plate 525, the first tab member 301, and the first inner plate 511 may be melted and mixed by the heat energy.

As a molten material of the first center plate 525, the first tab member 301, and the first inner plate 511 is cured, the first center plate 525, the first tab member 301, and the first inner plate 511 may be bonded integrally.

Then, the first connecting member 530 is moved in the direction opposite to the first direction toward the first center plate 525, and the first connecting member 530 is inserted into the first accommodating portion 526.

The laser welder may radiate a laser beam from the outer surface of the first extension plate 527 toward the first connecting member 530.

Heat energy generated by the laser beam radiated from the laser welder may be sequentially transmitted from the first extension plate 527 to the first connecting member 530, and the first extension plate 527 and the first connecting member 530 may be melted and mixed by the heat energy.

Then, as a molten material of the first extension plate 527 and the first connecting member 530 is cured, the first extension plate 527 and the first connecting member 530 may be bonded integrally.

Operations S210 to S250 according to the present embodiment may be performed in a state in which the second connecting member 730 is separated from the second outer plate 721.

In operations S260 and S270 according to the present embodiment, the second outer current collector 720 may be moved in the direction opposite to the first direction by a transport means such as a gripper or an adsorption device in a state of being disposed to face the second outer surface 302b in the first direction.

As the second outer current collector 720 moves a set distance or more in the direction opposite to the first direction, the second center plate 725 is in contact with the second outer surface 302b and presses the second outer surface 302b in the direction opposite to the first direction.

The second tab 320 located at the end portion of the second tab member 302 is deformed by being compressed by the pressing force applied from the second center plate 725.

After operation S270, the second tab member 302, the second inner current collector 710, and the second outer current collector 720 are bonded (S280).

In operation S280, the laser welder may radiate a laser beam toward an outer surface of the second center plate 725 disposed to face the first direction.

Heat energy generated by the laser beam radiated from the laser welder may be sequentially transmitted to the second center plate 725, the second tab member 302, and the second inner plate 711, and the second center plate 725, the second tab member 302, and the second inner plate 711 may be melted and mixed by the heat energy.

As a molten material of the second center plate 725, the second tab member 302, and the second inner plate 711 is cured, the second center plate 725, the second tab member 302, and the second inner plate 711 may be bonded integrally.

Then, the second connecting member 730 is moved in the direction opposite to the first direction toward the second center plate 725, and the second connecting member 730 is inserted into the second accommodating portion 726.

The laser welder may radiate a laser beam from the outer surface of the second extension plate 727 toward the second connecting member 730.

Heat energy generated by the laser beam radiated from the laser welder may be sequentially transmitted from the second extension plate 727 to the second connecting member 730, and the second extension plate 727 and the second connecting member 730 may be melted and mixed by the heat energy.

Then, as a molten material of the second extension plate 727 and the second connecting member 730 is cured, the second extension plate 727 and the second connecting member 730 may be bonded integrally.

Hereinafter, a battery pack according to one embodiment of the present disclosure will be described.

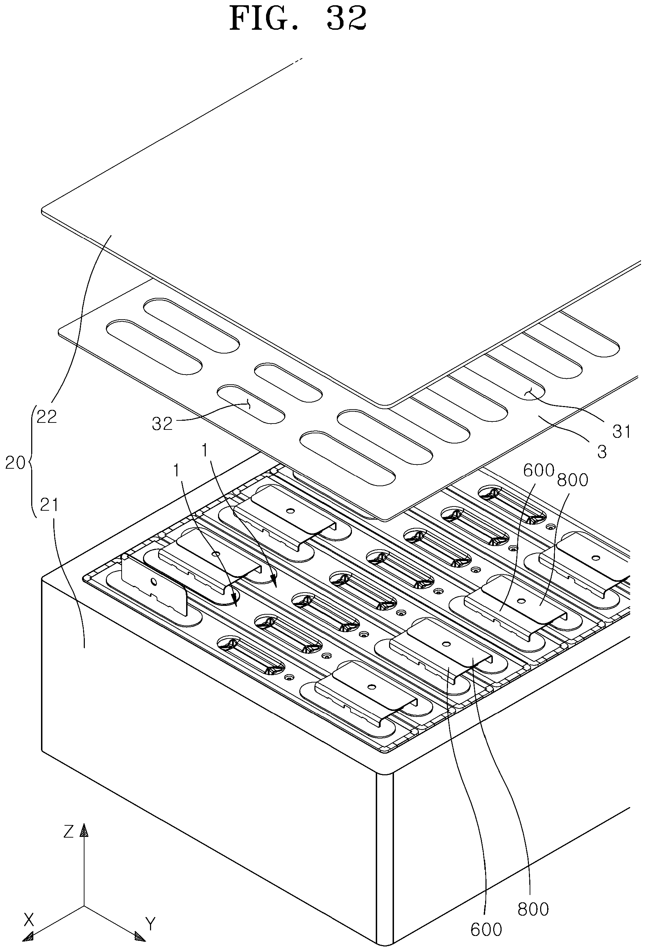

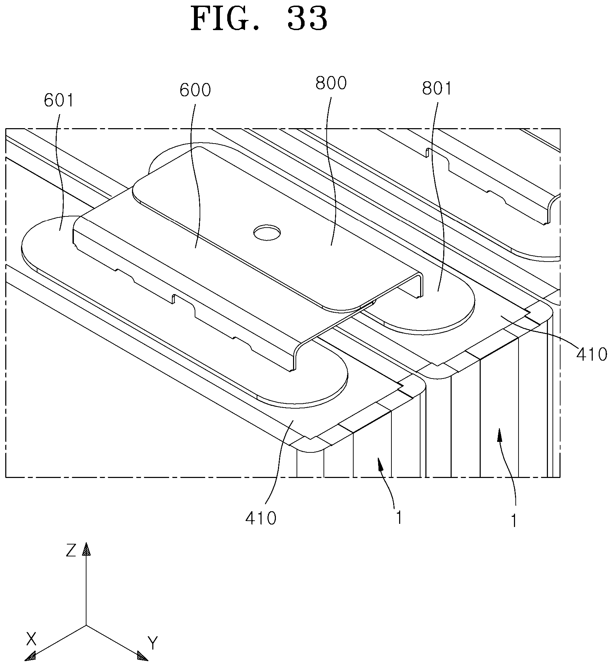

FIG. 32 is a schematic perspective view showing a configuration of a battery pack according to one embodiment of the present disclosure, and FIG. 33 is a schematic enlarged view showing an electrical connection configuration of the battery pack according to one embodiment of the present disclosure.

Referring to FIGS. 1 to 33, the battery pack according to the present embodiment may include a secondary battery 1, a housing 20, and a holder 3.

The secondary battery 1 may be configured in the same manner as one of the secondary batteries 1 according to the above-described embodiments.

The housing 20 may form an exterior (e.g., rough exterior or durable exterior) of the battery pack and provide a space in which the secondary battery 1 may be accommodated.

The housing 20 according to the present embodiment may include a housing body 21 and a cover 22.

The housing body 21 may be formed to have a box shape with a hollow interior and an open side. A cross-sectional shape of the housing body 21 is not limited to a quadrangular shape shown in FIG. 32, and may be changed in design to have any of various shapes such as polygon, circle, or oval.

The cover 22 may be coupled to the housing body 21 and may close an internal space of the housing body 21. For example, the cover 22 may be formed to have substantially a plate shape and disposed to face the open side of the housing body 21. The cover 22 may be fixed to the housing body 21 by any type of coupling method such as a bolting, welding, or fitting method.

A plurality of secondary batteries 1 may be provided in the battery pack according to the present embodiment. The plurality of secondary batteries 1 may be arranged in two columns or more in at least one of the longitudinal direction of the housing 20, that is, the second direction, or the width direction, that is, the third direction. Although FIG. 32 shows an example in which the plurality of secondary batteries 1 are arranged in eight columns in the second direction, the arrangement form of the plurality of secondary batteries 1 is not limited thereto and may be changed in design to have various forms. The plurality of secondary batteries 1 may be arranged in parallel. The number of secondary batteries 1 may be variously changed in design depending on the size, shape, etc., of the housing 20.

The holder 3 may support a substrate, sensor, etc., for measuring a voltage and temperature of the secondary battery 1 inside the housing 20.

The holder 3 according to the present embodiment may be formed to have a flat plate shape. The holder 3 may be disposed between the cover 22 and the secondary battery 1. The holder 3 may include an electrically insulating polymer compound material.

A terminal hole 31 into which the first terminal 600 and the second terminal 800 of the secondary battery 1 are inserted may be formed in the holder 3. A plurality of terminal holes 31 may be provided. The plurality of terminal holes 31 may be disposed at locations into which the first terminal 600 and the second terminal 800 of different secondary batteries 1 may be inserted.

The holder 3 may be formed with a holder vent hole 32 that is disposed to face the vent hole 440 of the secondary battery 1. A plurality of holder vent holes 32 may be provided and arranged in the second direction. Each of the holder vent holes 32 may be disposed to face the vent hole 440 of one of the secondary batteries 1.

In the present embodiment, the first terminal 600 of one of a pair of neighboring secondary batteries 1 and the second terminal 800 of the other one of the pair of secondary battery 1 may be disposed to face each other in the second direction. The front portion 120 of one of the neighboring secondary batteries 1 may be disposed to face the rear portion 130 of the other secondary battery 1. Therefore, in the present embodiment, the first terminal 600 and the second terminal 800 of different secondary batteries 1 may be alternately disposed in the second direction.

In the present embodiment, the first terminal 600 of one of the secondary batteries 1 may be directly connected to the second terminal 800 of an adjacent secondary battery 1.

For example, the first bending plate 620 of the first terminal 600 of one of the secondary batteries 1 may be bent in the second direction toward the second terminal 800 of an adjacent secondary battery 1. In addition, the second bending plate 820 of the second terminal 800 of the one of a pair of secondary batteries 1 disposed adjacent to each other may be bent in the third direction toward the first terminal 600 of the other one of the pair of secondary batteries 1 disposed adjacent to each other.

The first bending plate 620 of one of the pair of secondary batteries 1 disposed adjacent to each other may be in contact with the second bending plate 820 of the other. The first bending plate 620 of one of the pair of secondary batteries 1 disposed adjacent to each other and the second bending plate 820 of the other may be electrically and mechanically connected by any type of coupling method such as a welding or bolting method. Therefore, the battery pack according to the present embodiment may electrically connect the pair of secondary batteries 1 adjacent to each other without a busbar, thereby reducing the number of parts and reducing manufacturing cost.

However, the present disclosure is not limited thereto, and the first terminal 600 of one of a pair of secondary batteries 1 adjacent to each other and the second terminal 800 of the other secondary battery 1 may be disposed to face each other in the longitudinal direction of the housing 2. In this case, for example, the first terminal 600 of one of the pair of secondary batteries 1 adjacent to each other may be connected to the first terminal 600 of the other secondary battery 1.

According to the present disclosure, it is possible to prevent or substantially prevent electrical connection of some electrodes from being missed in a process of bonding a tab member and a current collector, thereby increasing power efficiency. That is, defects in bonding the tab member and the current collector may be prevented or substantially prevented, to thereby increase power efficiency.

According to the present disclosure, because different terminals of a secondary battery can be directly connected without a busbar by deforming a terminal extending outward from a cap plate, it is possible to reduce the number of parts for electrical connection, contact resistance between parts, and manufacturing costs.

While the present disclosure has been described with reference to embodiments shown in the drawings, these embodiments are merely illustrative and it should be understood that various modifications and equivalent other embodiments can be derived by those skilled in the art on the basis of the embodiments.

## Claims

1. A secondary battery (1) comprising:
a case (100);
an electrode assembly (200) inside the case (100) and having a first electrode (210) and a second electrode (220);
a first tab member (301) connected to the first electrode (210) and having a first insertion hole (301a);
a cap plate (410) coupled to the case (100) and facing the electrode assembly (200);
a first inner current collector (510) inserted into the first insertion hole (301a);
a first outer current collector (520) facing the first inner current collector (510) with the first tab member (301) interposed therebetween; and
a first terminal (600) connected to the first outer current collector (520) and extending outward from the cap plate (410).

2. The secondary battery (1) as claimed in claim 1, wherein
the first tab member (301) comprises a plurality of first tabs (310) extending from the first electrode (210) in a first direction and arranged in a second direction crossing the first direction, and
the first insertion hole (301a) passes through the plurality of first tabs (310) in the second direction.

3. The secondary battery (1) as claimed in claim 2, wherein the first inner current collector (510) comprises:
a first inner plate (511) inserted into the first insertion hole (301a) and arranged parallel to the second direction; and
a first inner guide part (512) extending obliquely from the first inner plate (511) in the first direction.

4. The secondary battery (1) as claimed in claim 3, wherein
an end portion of the first inner plate (511) protrudes outward from the first insertion hole (301a), and
the first inner guide part (512) extends from the end portion of the first inner plate (511).

5. The secondary battery (1) as claimed in claim 4, wherein the first inner current collector (510) comprises a pair of first inner guide parts (512) respectively on two end portions of the first inner plate (511).

6. The secondary battery (1) as claimed in claim 5, wherein a distance between the pair of first inner guide parts (512) increases from a portion adjacent to the first inner plate (511) toward an end portion of the pair of first inner guide parts (512).

7. The secondary battery (1) as claimed in claims 3 to 6, wherein the first outer current collector (520) comprises:
a first outer plate (521) between the first tab member (301) and the cap plate (410); and
a first outer guide part (524) extending obliquely from the first outer plate (521) in a direction opposite to the first direction.

8. The secondary battery (1) as claimed in claim 7 wherein the first outer current collector (520) further comprises a first connecting member (530) connected to the first outer plate (521) and supporting the first terminal (600).

9. The secondary battery (1) as claimed in claim 8, wherein the first connecting member (530) comprises a first bending portion (531) that is bendable in a third direction crossing the first direction and the second direction.

10. The secondary battery (1) as claimed in claim 8, wherein the first outer plate (521) comprises:
a first center plate (522, 525) in contact with the first tab member (301);
a first accommodating portion (526) facing the first center plate (522, 525); and
a first extension plate (523, 527) extending from the first center plate (522, 525) in the first direction and surrounding the first accommodating portion (526), and
the first connecting member (530) is inserted into the first accommodating portion (526).

11. The secondary battery (1) as claimed in claims 1 to 9, further comprising:
a second tab member (302, 307) connected to the second electrode (220) and having a second insertion hole (302a);
a second inner current collector (710) inserted into the second insertion hole (302a);
a second outer current collector (720) facing the second inner current collector (710) with the second tab member (302, 307) interposed therebetween; and
a second terminal (800) connected to the second outer current collector (720) and extending outward from the cap plate (410).

12. A secondary battery (1) manufacturing method, the method comprising:
forming a first tab member (301);
forming a first insertion hole (301a) in the first tab member (301);
inserting a first inner current collector (510) into the first insertion hole (301a);
bringing a first outer current collector (520) into contact with the first tab member (301); and
bonding the first tab member (301), the first inner current collector (510), and the first outer current collector (520).

13. The method as claimed in claim 12, further comprising, after the inserting of the first inner current collector (510) into the first insertion hole (301a), bringing the first inner current collector (510) into contact with the first tab member (301).

14. The method as claimed in claim 12, further comprising, after the bringing of the first outer current collector (520) into contact with the first tab member (301), pressing the first outer current collector (520) toward the first inner current collector (510).

15. A battery pack comprising:
a housing (2, 20); and
a plurality of secondary batteries inside the housing (2, 20),
wherein the secondary battery (1) comprises:
a case (100);
an electrode assembly (200) inside the case (100) and having a first electrode (210) and a second electrode (220);
a first tab member (301) connected to the first electrode (210) and having a first insertion hole (301a);
a cap plate (410) coupled to the case (100) and facing the electrode assembly (200);
a first inner current collector (510) inserted into the first insertion hole (301a);
a first outer current collector (520) facing the first inner current collector (510) with the first tab member (301) interposed therebetween; and
a first terminal (600) connected to the first outer current collector (520) and extending outward from the cap plate (410).
